# FASCICULE DE BREVET EUROPEEN

(11) **EP 3 922 766 B1**
(45) Date de publication et mention de la délivrance du brevet: **01.11.2023**
(21) Numéro de dépôt: 21178825.2
(22) Date de dépôt: 10.06.2021
(51) Int. Cl.: D03C 5/02

(54) **LEVIER DE SORTIE À GALETS SUIVEURS DE MÉCANIQUE D'ARMURE À CAMES ET SON PROCÉDÉ DE FABRICATION, MACHINE DE FORMATION DE LA FOULE ÉQUIPÉE D'UN TEL LEVIER ET MÉTIER À TISSER ÉQUIPÉ D'UNE TELLE MACHINE**
AUSGANGSHEBEL MIT NACHLAUFROLLEN FÜR SCHAFTMASCHINENNOCKENMECHANIK UND SEIN HERSTELLUNGSVERFAHREN, FACHBILDEMASCHINE, DIE MIT EINEM SOLCHEN HEBEL AUSGESTATTET IST, UND WEBRAHMEN, DER MIT EINER SOLCHEN MASCHINE AUSGESTATTET IST
OUTLET LEVER WITH CAM DOBBY FOLLOWER ROLLERS AND METHOD FOR MANUFACTURING SAME, SHEDDING MACHINE PROVIDED WITH SUCH A LEVER AND WEAVING LOOM EQUIPPED WITH SUCH A MACHINE

(30) Priorité: 11.06.2020 FR 2006114
(43) Date de publication de la demande: 15.12.2021
(73) Titulaire: Staubli Faverges, 74210 Faverges-Seythenex (FR)
(72) Inventeur: LEGER, Sylvain, 74000 Annecy (FR); BONNEAU, David, 74210 Lathuile (FR); POLLET, François, 74940 Annecy le Vieux (FR)
(74) Mandataire: Lavoix

(56) Documents cités:
- EP-A1- 1 730 338
- EP-A1- 3 162 933
- CN-U- 203 807 652
- DE-A1- 2 503 127

## Description

La présente invention a trait à un levier de sortie à galets suiveurs utilisé dans une mécanique d'armure à cames, ainsi qu'à un procédé de fabrication d'un tel levier. L'invention a également trait à une machine de formation de la foule comprenant un tel levier et à un métier à tisser équipé d'une telle machine.

Dans le domaine des métiers à tisser, on connaît les mécaniques d'armure à cames qui comprennent une série de leviers oscillants en nombre égal au nombre maximum de cadres de lisses à monter sur un métier, chaque levier oscillant, dit aussi levier de sortie, étant prévu pour être attelé à l'un des cadres et équipé de deux galets qui coopèrent avec les deux pistes d'une came complémentaire entraînée en rotation par un arbre commun. Les pistes conjuguées d'une même came sont décalées axialement et les galets portés par le levier associé doivent avoir le même décalage axial que les pistes de la came.

Pour ce faire, il est connu, par exemple de CN-U-203807652, de monter en chape les galets sur corps du levier au moyen de deux flasques, un premier flasque étant directement ménagé dans l'épaisseur du corps du levier par usinage sur une surface latérale du levier, tandis qu'un deuxième flasque est fixé sur le corps du levier au moyen de rivets. L'usinage du premier flasque dans le corps est une opération qui, en plus d'être coûteuse, est susceptible de libérer des contraintes internes du matériau et d'occasionner des déformations qui apparaissent après l'usinage. Une opération supplémentaire de redressage est alors nécessaire pour compenser ces déformations, le positionnement des galets par rapport aux cames devant être très précis pour limiter les efforts de torsion et limiter les risques de défaillance prématurée des leviers.

Il est aussi connu, par exemple de EP-A-1730338 ou de EP-3 162 933-A1, de monter chaque galet entre deux flasques d'une paire de flasques, les flasques étant fixés sur le corps du levier. Un premier flasque de chaque paire de flasques est partiellement engagé dans un logement creux usiné sur une surface latérale du corps. Là encore, l'opération d'usinage est coûteuse et demande généralement une étape supplémentaire de redressage. Un levier de sortie selon le préambule de la revendication 1 est connu de EP 3 162 933 A1.

C'est à ces inconvénients qu'entend plus particulièrement remédier l'invention, en proposant un nouveau levier à galets suiveurs qui présente une structure simple et peu coûteuse à fabriquer.

À cet effet, l'invention concerne un levier de sortie à galets suiveurs de mécanique d'armure à cames, qui comprend un corps et deux galets suiveurs. Le corps du levier de sortie, ménagé dans une plaque avec deux faces opposées définissant entre elles un plan médian, comprend une portion centrale avec deux surfaces opposées, dans laquelle est ménagé un alésage centré sur un axe principal recevant un palier, deux portions d'attache et une extension, les portions d'attaches et l'extension étant ménagées radialement à l'axe principal et étant distincts les unes des autres. Chaque galet suiveur est décalé du plan médian suivant l'axe principal et comprend une bague intérieure, une bague extérieure et des éléments roulants interposés entre les bagues intérieure et extérieure de manière que la bague extérieure est libre en rotation par rapport à la bague intérieure autour d'un axe de galet parallèle à l'axe principal, la bague extérieure disposant d'une surface de contact, qui est radiale à l'axe de galet et destinée au contact avec une piste d'une came de la mécanique d'armure. Chaque galet suiveur est relié à une portion d'attache respective au moyen d'un dispositif d'attache respectif, chaque dispositif d'attache comprenant une attache intérieure située du côté de l'autre galet suiveur par rapport à la bague intérieure et une attache extérieure située du côté opposé à l'autre galet suiveur par rapport à la bague intérieure, les attaches intérieure et extérieure comprenant chacune un ou plusieurs flasques, qui sont chacun ménagés dans une plaque, qui sont en appui plan sur plan entre eux et qui sont assemblés les uns aux autres. Chaque galet suiveur est monté en chape entre un flasque intérieur d'une attache intérieure et un flasque extérieur d'une attache extérieure et fixé aux flasques intérieur et extérieur par un dispositif de fixation, les attaches extérieures sont assemblées à la portion d'attache correspondante par des rivets de levier, l'attache extérieure étant en appui plan sur plan sur l'une des faces de la portion d'attache correspondante de manière que les surfaces de contact des deux galets suiveurs sont situées de part et d'autre du plan médian. Selon l'invention, au moins l'un des galets suiveurs, dit premier galet suiveur, est fixé sur une première des deux portions d'attache au moyen d'un premier dispositif d'attache, alors que la première portion d'attache du levier de sortie comprend deux surfaces opposées qui sont reliées entre elles par un rebord et qui sont séparées l'une de l'autre d'une distance égale à une épaisseur de la portion centrale, que chacune des deux surfaces de la première portion d'attache est coplanaire avec une surface respective de la portion centrale et que la surface de contact du premier galet suiveur est située en regard du rebord de la première portion d'attache.

Grâce à l'invention, le dispositif d'attache des galets sur le corps du levier de sortie comprend des pièces ménagées dans des plaques ou des bagues d'entretoise, autrement dit des pièces aux géométries simples, qui sont peu coûteuses à fabriquer. Les portions d'attache présentent une épaisseur constante et ne demandent aucun usinage surfacique pour le montage des galets, ce qui est économique. Les galets sont fixés au corps du levier par un assemblage de plaques et de bagues fixées au moyen d'organes de fixation tels que des rivets, un tel assemblage étant simple à réaliser et durable.

Selon des aspects avantageux mais non obligatoires de l'invention, un tel levier de sortie peut incorporer une ou plusieurs des caractéristiques suivantes prises selon toute combinaison techniquement admissible :
- les attaches intérieure et extérieure du premier dispositif d'attache sont assemblées au moyen de rivets de chape ;
- l'attache extérieure comprend un flasque extérieur et un flasque entretoise, les flasques extérieur et entretoise étant chacun ménagés dans une plaque respective et étant assemblés entre eux par rivetage, le flasque extérieur présentant une face interne et une face externe opposée, la face interne du flasque extérieur étant en appui sur le premier galet suiveur, le flasque extérieur étant fixé au premier galet suiveur par le dispositif de fixation, tandis que le flasque entretoise est assemblé à la première portion d'attache au moyen des rivets de levier, le flasque entretoise étant interposé entre le flasque extérieur et la première portion d'attache de manière à décaler la face interne du flasque extérieur par rapport à une première des deux surfaces de la première portion d'attache ;
- l'attache intérieure du premier système d'attache comprend un flasque intérieur, qui est ménagé dans une plaque et qui présente une face externe et une face interne opposée et qui est en appui sur le premier galet suiveur, le flasque intérieur étant fixé au premier galet suiveur au moyen du dispositif de fixation, alors que le flasque intérieur est en appui sur l'attache extérieure par l'intermédiaire d'une ou plusieurs entretoises ménagées dans une plaque, de manière que la face interne du flasque intérieur et la face interne du flasque extérieur sont parallèles entre elles et séparées d'une distance égale, aux jeux d'assemblage près, à l'épaisseur du premier galet suiveur ;
- chaque entretoise est solidarisée au flasque intérieur et à l'attache extérieure au moyen d'un ou plusieurs rivets de chape ;
- le ou les plusieurs rivets de chape solidarisent au flasque intérieur de l'attache intérieure et au flasque extérieur de l'attache extérieure, le flasque entretoise de l'attache extérieure et chaque entretoise ;
- l'attache intérieure comprend un flasque de renfort, qui est ménagé dans une plaque et présente une face interne et une face externe opposée, la face interne du flasque de renfort étant conjointement en appui sur la face externe du flasque intérieur et sur une deuxième des deux surfaces de la première portion d'attache, le flasque de renfort étant, d'une part, fixé à la première portion d'attache au moyen des rivets de levier et, d'autre part, fixé au flasque intérieur au moyen des rivets de chape ;
- les deux galets suiveurs sont montés à une portion d'attache respective au moyen d'un dispositif d'attache respectif, chaque dispositif d'attache étant similaire, de préférence identique, au premier dispositif d'attache ;
- les flasques extérieurs des deux dispositifs d'attache sont identiques ;
- les flasques intérieurs des deux dispositifs d'attache sont identiques, et
- chaque dispositif d'attache comprend deux organes de fixation, tels que des rivets, chaque bague intérieure présente une forme de disque centré sur l'axe de galet respectif et définit un demi-disque interne et un demi-disque externe complémentaire du demi-disque interne, le demi disque interne de chaque galet suiveur étant situé du côté de l'autre galet suiveur, alors que les organes de fixation de chaque galet suiveur sont ménagés dans le demi-disque externe de ce galet suiveur.

L'invention concerne aussi une machine de formation de la foule de type mécanique d'armure à cames, qui comprend un levier de sortie tel que décrit précédemment.

Selon un autre aspect, l'invention concerne un métier à tissé, équipé d'une telle mécanique.

L'invention concerne enfin un procédé d'assemblage d'un levier de sortie tel que décrit précédemment, le procédé d'assemblage comprenant les étapes consistant à :
a) empiler, dans un outil de positionnement, le flasque intérieur, les entretoises, le flasque entretoise et le flasque extérieur, de manière à faire coïncider tous les trous de passage des rivets de chape ;
b) insérer les rivets de chape dans les trous de passage correspondants puis déformer les rivets de chape sous presse de manière que le flasque intérieur, l'entretoise, le flasque entretoise et le flasque extérieur sont solidarisés les uns aux autres et forment ensemble un sous-ensemble d'attache ;
c) positionner l'attache extérieure du sous-ensemble d'attache sur la portion d'attache correspondante de manière à faire coïncider les trous de passage des rivets de levier ;
d) insérer les rivets de levier dans les trous de passage correspondants puis déformer les rivets de levier sous presse de manière à solidariser le sous-ensemble d'attache à la portion d'attache correspondante ;
e) positionner le galet suiveur entre les flasques intérieur et extérieur du dispositif d'attache correspondant, de manière à faire coïncider les trous de passage du dispositif de fixation, et
f) insérer le dispositif de fixation dans les trous de passage correspondants puis déformer le dispositif de fixation sous presse de manière à solidariser le galet suiveur au sous-ensemble d'attache.

Avantageusement :
- à l'étape a) du procédé d'assemblage, le flasque de renfort est mis en place conjointement au flasque intérieur, alors qu'à l'issue de l'étape b), le flasque de renfort fait partie du sous-ensemble d'attache, et
- le procédé d'assemblage comprend une étape intermédiaire, postérieure à l'étape d) et antérieure à l'étape e), l'étape intermédiaire consistant à effectuer une reprise d'usinage des trous de passage des dispositifs de fixation et de l'alésage du corps du levier.

L'invention sera mieux comprise, et d'autres avantages de celle-ci apparaîtront plus clairement à la lumière de la description qui va suivre, de cinq modes de réalisation d'un levier de sortie d'une mécanique d'armure à cames et de son procédé de fabrication associé, d'une machine de formation de la foule de type mécanique d'armure à cames équipée d'un tel levier et d'un métier à tisser équipé d'une telle machine conformes à son principe, donnée uniquement à titre d'exemple et faite en référence aux dessins annexés, dans lesquels :
- [Fig 1] la figure 1 est une représentation schématique partielle de principe d'un métier à tisser conforme à l'invention ;
- [Fig 2] la figure 2 est une vue à plus grande échelle du détail II à la figure 1, comprenant un levier de sortie conforme à un premier mode de réalisation de l'invention, certaines pièces étant omises pour faciliter la lecture ;
- [Fig 3] la figure 3 est une vue en perspective du levier de sortie de la figure 2 ;

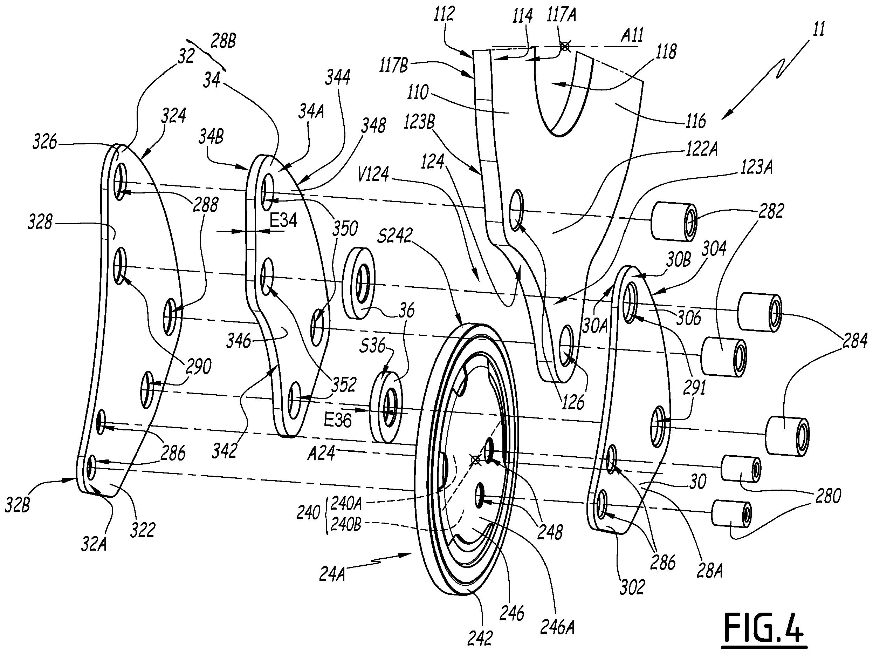

- [Fig 4] la figure 4 est une vue en perspective éclatée du détail IV à la figure 3 ;

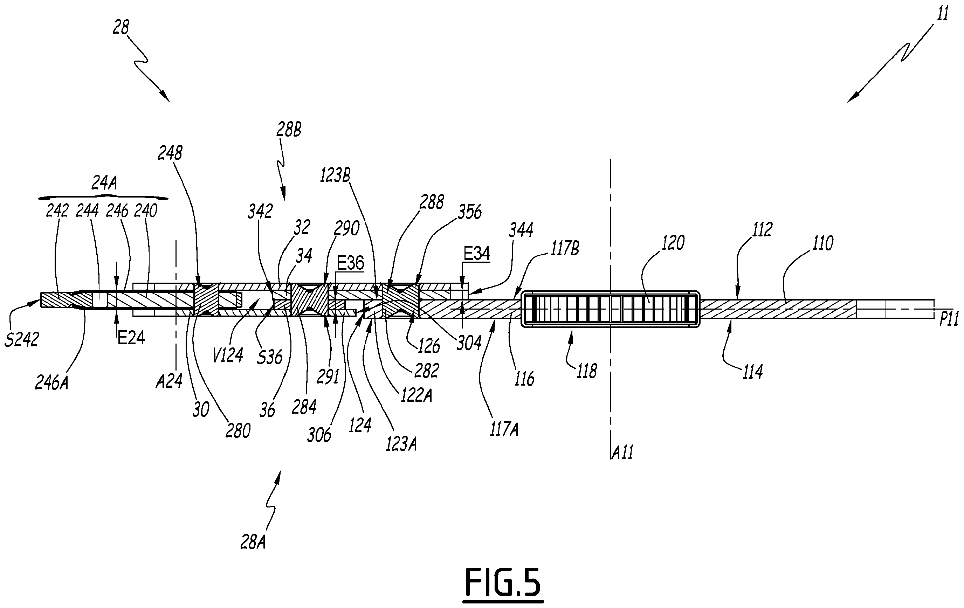

- [Fig 5] la figure 5 est une coupe partielle selon la ligne V-V à la figure 2 ;

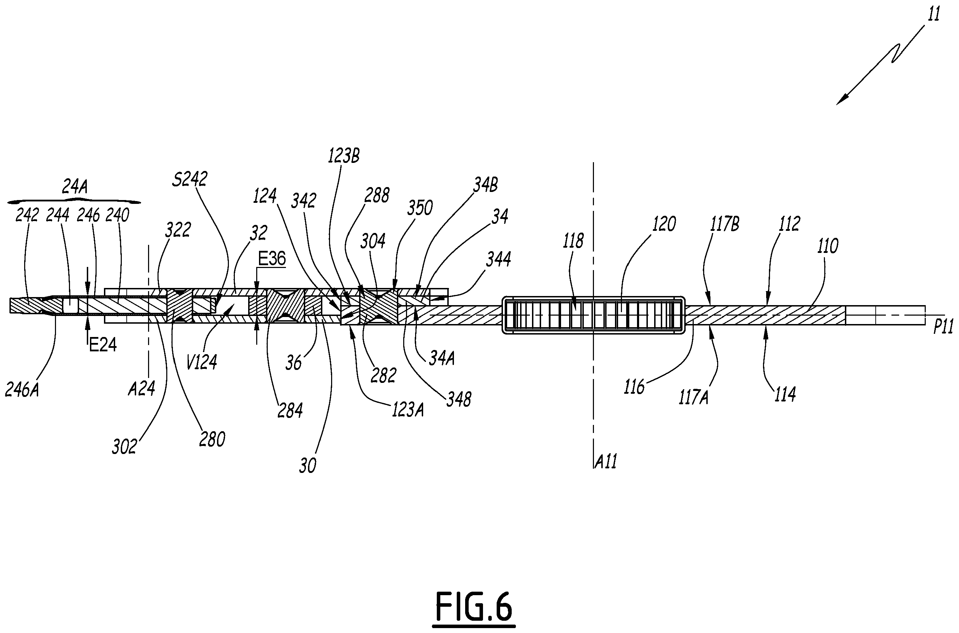

- [Fig 6] la figure 6 est une vue analogue à la figure 5, d'un levier de sortie conforme à un deuxième mode de réalisation de l'invention ;

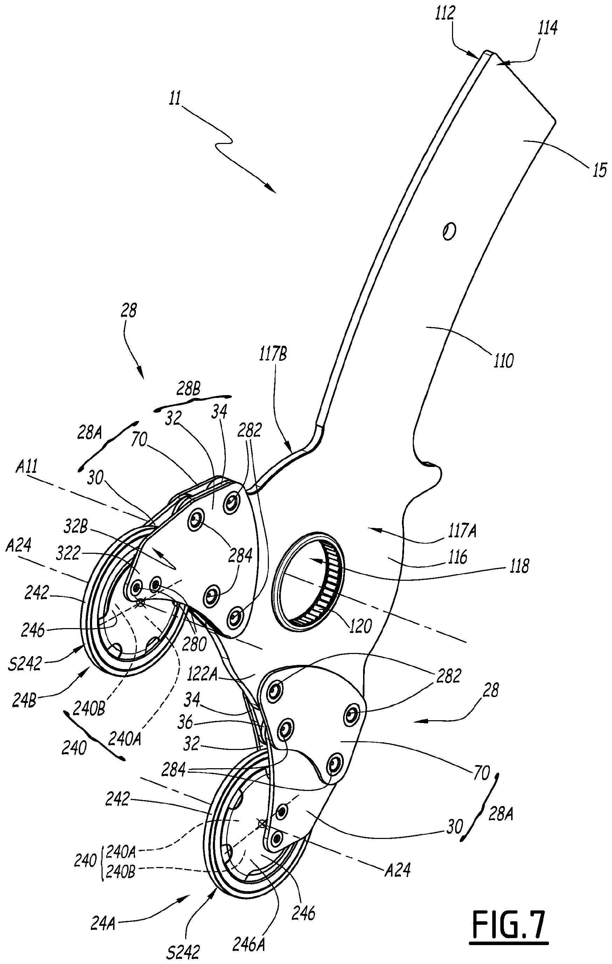

- [Fig 7] la figure 7 est une vue analogue à la figure 3, d'un levier de sortie conforme à un troisième mode de réalisation de l'invention ;

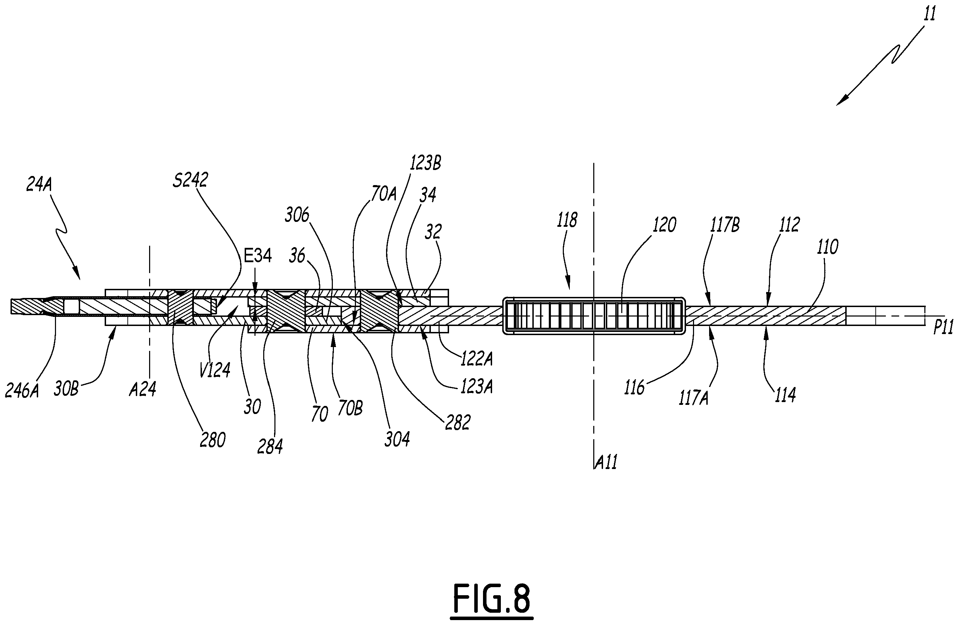

- [Fig 8] la figure 8 est une vue en coupe partielle analogue à la figure 5, du levier de sortie de la figure 7 ;

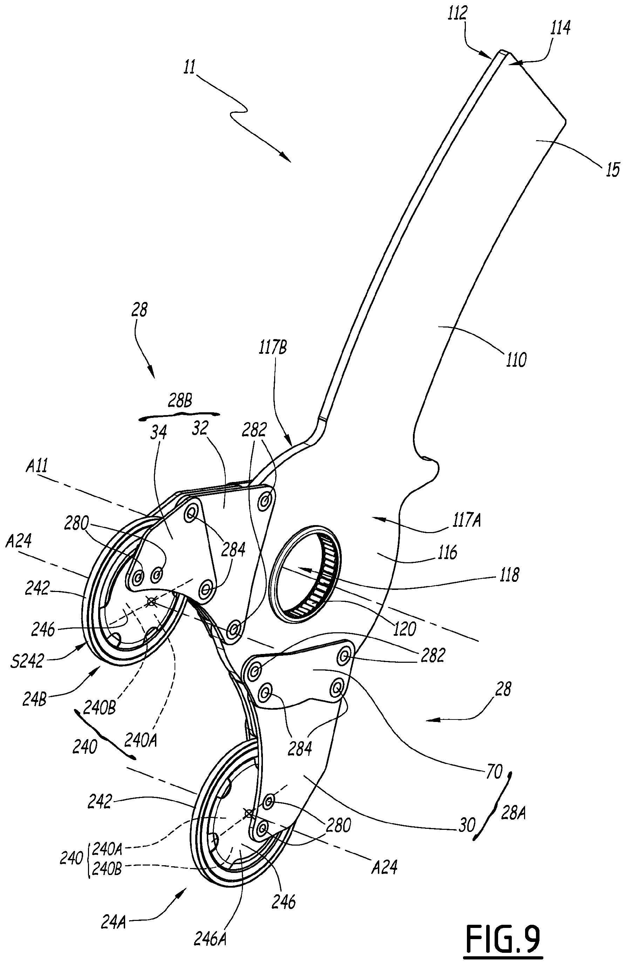

- [Fig 9] la figure 9 est une vue analogue à la figure 3, d'un levier de sortie conforme à un quatrième mode de réalisation de l'invention ;

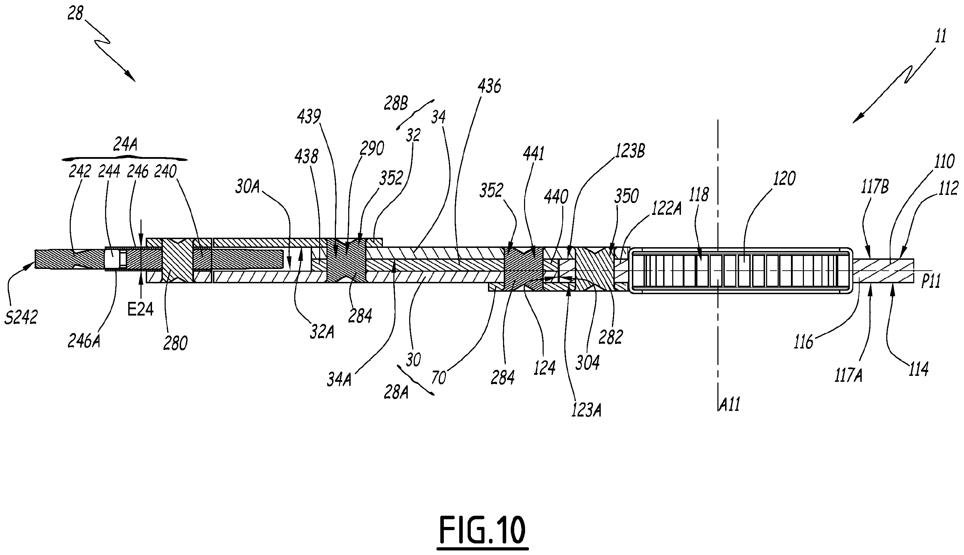

- [Fig 10] la figure 10 est une vue en coupe partielle analogue à la figure 5, du levier de sortie de la figure 9, et

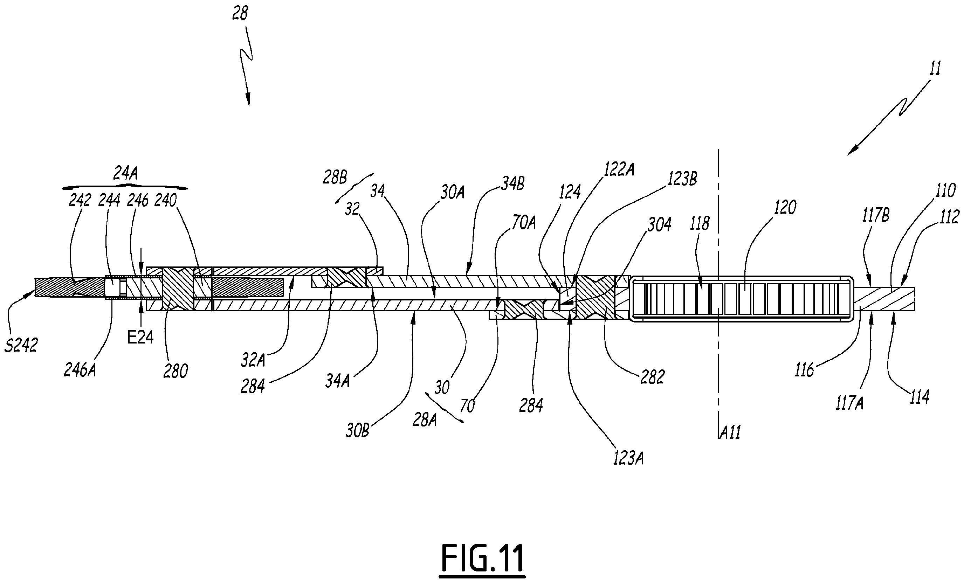

- [Fig 11] la figure 11 est une vue en coupe partielle analogue à la figure 5, d'un levier de sortie conforme à un cinquième mode de réalisation de l'invention.

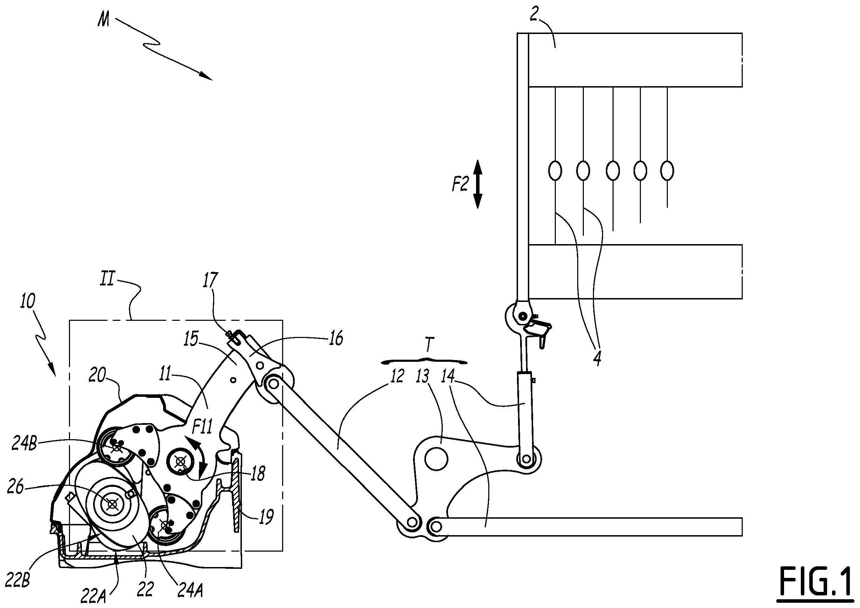

Un métier à tisser M est représenté à la figure 1. Le métier M est équipé de cadres 2 avec des lisses 4, munies chacune d'un oeillet de passage d'un ou de fil(s) de chaine. Les différents cadres 2 du métier M sont animés d'un mouvement d'oscillations verticales représenté par la double flèche F2 et généré par une mécanique d'armure 10, dont les leviers de sortie 11 attaquent respectivement des bielles de transmission 12 associées à des leviers de renvoi 13 reliés entre eux et au cadre 2 par des bielles 14. Pour chaque cadre 2, la bielle de transmission 12, le levier de renvoi 13 et les bielles 14 font partie d'un sous-ensemble appelé transmission T. Chaque bielle de transmission 12 est reliée par une extrémité à une extension 15 du levier 11 associé au moyen d'une agrafe 16, fixée à l'extension 15 au moyen d'une vis de serrage 17. L'agrafe 16 et la vis de serrage 17 sont représentées seulement sur la figure 1.

Les leviers 11 sont prévus en nombre équivalent au nombre maximum de cadres de lisses 2 du métier M et montés pivotants, comme représenté par la double flèche F11, autour d'un arbre de sortie 18 soutenu par le bâti 19 de la mécanique d'armure 10 et partiellement protégé par un capot 20. Sur la figure 1, l'arbre de sortie 18 est centré sur un axe orthogonal au plan de la figure 1. Sauf mention contraire, les mouvements des diverses pièces se font dans le plan de la figure 1, en particulier les mouvements de rotation des pièces se font autour d'axes orthogonaux au plan de la figure 1. Les axes de rotation des diverses pièces sont ainsi parallèles entre eux.

Ainsi, en répartissant les fils de chaîne sur au moins deux cadres 2 connectés à des leviers de sortie 11 animés de mouvements d'oscillation F11 en opposition de phase, les fils de chaîne peuvent s'ouvrir pour permettre le passage d'un fil de trame et se refermer pour permettre l'incorporation de ce fil de trame au tissu.

Un seul des cadres de lisses 2 et un seul des leviers 11 sont représentés sur la figure 1.

La mécanique d'armure 10 comporte également plusieurs cames complémentaires, dont une seule est représentée avec la référence 22, qui définissent chacune deux pistes conjuguées 22A et 22B, sur lesquelles viennent respectivement en appui deux galets suiveurs 24A et 24B supportés par un levier 11. Par extension, la mécanique d'armure 10 est aussi appelée mécanique d'armure à cames. Cette mécanique d'armure à cames 10 équipe le métier à tisser M.

Les cames 22 sont montées sur un arbre à cames 26, qui est mobile en rotation par rapport au bâti 16 autour d'un axe parallèle à l'axe de l'arbre de sortie 18. L'arbre à cames 26 est directement ou indirectement entraîné en rotation par un arbre du métier à tisser ou par un moteur, qui ne sont pas représentés.

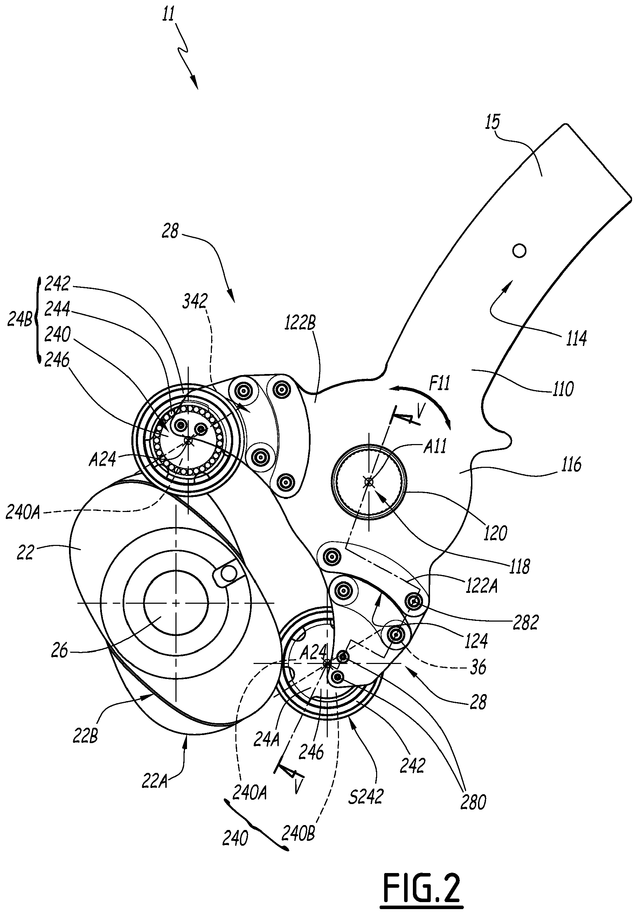

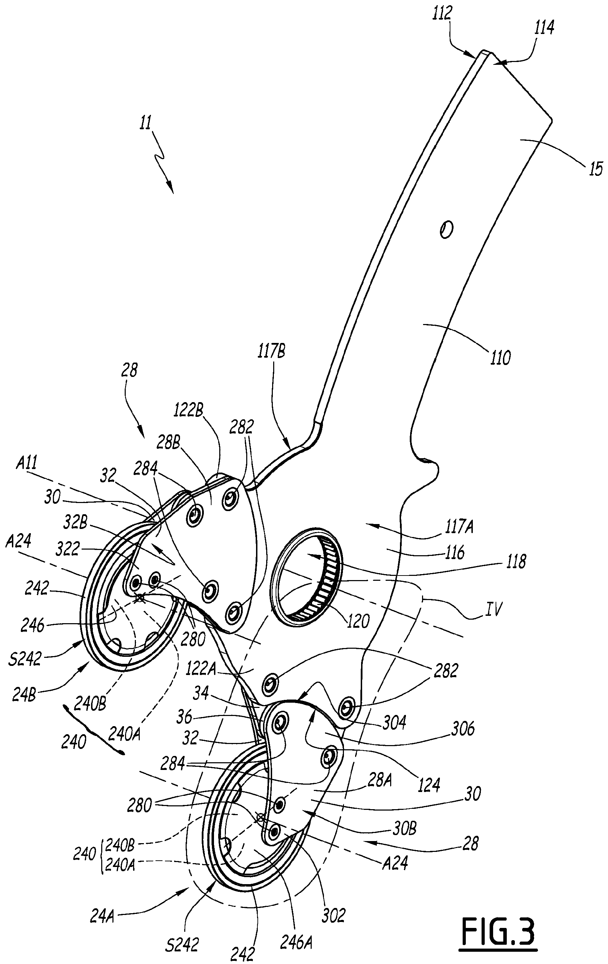

Le levier 11, visible notamment sur les figures 2 et 3, comporte un corps 110, est ménagé dans une plaque réalisée en un matériau rigide et résistant, tel que de l'acier, et présente deux faces opposées 112 et 114, qui sont planes sur l'ensemble du corps 110 et sont parallèles entre elles. Le corps 110 présente une épaisseur constante sur l'ensemble des faces 112 et 114 et définit un plan médian P11. Les deux faces 112 et 114 sont ainsi parallèles au et équidistantes du plan médian P11.

Le corps 110 comprend une portion centrale 116, dans laquelle est ménagé un alésage 118 centré sur un axe principal A11, qui est orthogonal au plan médian P11. L'alésage 118 reçoit un palier 120 de montage du levier 11 sur l'arbre de sortie 18. L'arbre de sortie 18 est donc centré sur l'axe principal A11. Le palier 120 est ici un roulement à aiguilles. L'alésage 118 doit être défini de façon précise afin de permettre un positionnement adéquat du levier de sortie 11 par rapport à son environnement, en particulier pour éviter que deux leviers de sortie 11 voisins ne se touchent lors de leurs mouvements d'oscillation. On définit une surface 117A comme étant une portion de la face 114 correspondant à la portion centrale 116. De façon analogue, on définit une surface 1 17B comme étant une portion de la face 112 correspondant à la portion centrale 116. La surface 117 A est ainsi orientée à l'opposé de la surface 117B.

Le corps 110 comprend aussi deux portions d'attache 122A et 122B, les portions d'attaches 122A et 122B et l'extension 15 étant ménagés radialement à l'axe principal A11 et étant distinctes les unes des autres. La portion d'attache 122A est reliée au galet suiveur 24A, tandis que la portion d'attache 122B est reliée au galet suiveur 24B, chaque galet suiveur 24A ou 24B étant relié à la portion d'attache correspondante par l'intermédiaire d'un dispositif d'attache 28 respectif, qui est détaillé ci-après, de manière que chaque galet suiveur 24A et 24B est décalé du plan médian P11 suivant l'axe principal A11.

Les faces 112 et 114 du corps 110 incluent les portions d'attache 122A et 122B ; autrement dit les portions d'attache 122A et 122B présentent des faces parallèles au plan médian P11 avec une épaisseur constante.

Dans l'exemple illustré sur les figures, les deux galets suiveurs 24A et 24B présentent avantageusement la même structure, voire sont identiques, ce qui permet de réduire les coûts par standardisation. De façon analogue, les dispositifs d'attache 28 associés à chacun des galets 24A ou 24B présentent avantageusement la même structure, voire sont identiques. D'autre part, les portions d'attache 122A et 122B du corps 110 présentent chacune une forme analogue l'une à l'autre. Dans la suite, on décrit principalement le galet suiveur 24A relié à la portion d'attache 122A et le dispositif d'attache 28 associé, cette description étant transposable au galet 24B rattaché à la portion d'attache 122B au moyen d'un dispositif d'attache 28 propre.

On définit une surface 123A comme étant une portion de la face 114 correspondant à la portion d'attache 122A. De façon analogue, on définit une surface 123B comme étant une portion de la face 112 correspondant à la portion d'attache 122A. La surface 123A est une orienté à l'opposé de la surface 123B.

La surface 123A de la portion d'attache 122A est ainsi coplanaire de la surface 117A de la portion centrale 116, tandis que la surface 123B de la portion d'attache 122A est coplanaire de la surface 117B de la portion centrale 116. Les surfaces 123A et 123B sont reliées entre elles par un rebord 124, qui présente une surface cylindrique dont la génératrice est parallèle à l'axe principal A11. Les surfaces 123A et 123B ne présentent en particulier aucun décrochement par rapport aux surfaces 117A ou 117B et sont séparées entre elles d'une épaisseur égale à une épaisseur de la portion centrale 116.

L'arête entre le rebord 124 et chacune des surfaces 123A et 123B peut présenter un arrondi ou un chanfrein, pour éviter à un opérateur de se blesser lors des manipulations du levier 11.

Le galet suiveur 24A comprend une bague intérieure 240, qui présente une forme de disque centré sur un axe de galet A24 propre, une bague extérieure 242 et des éléments roulants 244 interposés entre les bagues intérieure 240 et extérieure 242, de manière que la bague extérieure 242 est libre en rotation par rapport à la bague intérieure 240 autour de l'axe de galet A24 correspondant. Lorsque le galet 24A est relié à la portion d'attache 122A par l'intermédiaire du dispositif d'attache 28, l'axe de galet A24 est parallèle à l'axe principal A11. La bague extérieure 242 présente une surface de contact S242, qui est radiale à l'axe de galet A24 et est destinée au contact avec la piste 22A de la came 22. La surface de contact S242 est ici une portion de cylindre de section circulaire centré sur l'axe A24 correspondant.

Les éléments roulants 244, qui sont ici des rouleaux, sont maintenus axialement par rapport à l'axe de galet A24 par deux flancs 246, qui sont situés de part et d'autre de la bague intérieure 240, le long de l'axe de galet A24. Les bagues intérieure 240 et extérieure 242 sont par exemple réalisées dans des plaques d'acier d'une épaisseur comprise par exemple entre 2 mm et 20 mm, tandis que les flancs 246 sont par exemple réalisés dans des tôles d'acier traité, d'une épaisseur comprise entre 0,1 mm et 1 mm.

Pour chaque galet 24A ou 24B, on définit une épaisseur du galet E24, égale à une épaisseur cumulée de la bague intérieure 240 et des deux flancs 246, mesurée parallèlement à l'axe A24 correspondant.

Deux trous 248 sont ménagés au travers de la bague intérieure 240 et des flancs 246. Chaque trou 248, centré sur un axe parallèle à l'axe de galet A24, permet le passage d'un organe de fixation 280 du dispositif d'attache 28. Dans l'exemple illustré, l'organe de fixation 280 reçu dans chacun des trous 248 est un rivet, dit « de galet ».

Lorsque le galet 24A ne comprend qu'un seul trou 248 recevant un organe de fixation 280 comme c'est le cas dans l'état de la technique, le trou 248 est aligné avec l'axe de galet A24 car il subsiste des risques que la bague intérieure 240 du galet A24 se déplace en rotation par rapport au dispositif d'attache 28 autour d'un axe centré sur le trou 248.

Dans l'exemple illustré, chaque dispositif d'attache 28 comprend deux organes de fixation 280, le galet suiveur 24A comprenant deux trous 248 distincts, recevant chacun un organe de fixation 280 respectif. Les mouvements de rotation de la bague intérieure 240 par rapport au dispositif d'attache 28 sont ainsi empêchés.

Avantageusement, les organes de fixation 280, et donc les trous 248 ménagés dans la bague intérieure 240 du galet suiveur A24, sont plus éloignés de l'autre galet suiveur 24B que l'axe de galet A24 du galet suiveur 24A.

Dit autrement, la bague intérieure 240 présente une forme de disque centré sur l'axe de galet A24 et définit un demi-disque interne 240A et un demi-disque externe 240B, complémentaire du demi-disque interne 240A, le demi disque interne 240A du galet suiveur 24A étant situé du côté de l'autre galet suiveur 24B. Les trous 248 de la bague intérieure 240 du galet suiveur 24A sont ménagés au travers du demi-disque externe 240B de cette bague intérieure 240, c'est-à-dire que ces trous 248 sont plus éloignés de l'axe de galet A24 de l'autre galet suiveur 24B que l'axe A24 de la bague intérieure 240 dans laquelle ces trous 248 sont percés.

Symétriquement, les trous 248 ménagés dans la bague intérieure 240 du galet suiveur 24B sont plus éloignées de l'axe de galet A24 du galet suiveur 24A que l'axe de galet A24 du galet suiveur 24B.

Cette configuration permet de ménager des pistes 22A et 22B de came 22 avec des profils conjugués présentant des différences de rayons importantes, sans risque d'interférence des pistes 22A ou 22B avec les dispositif d'attache 28 du levier 11. Ceci permet d'augmenter les accélérations du mouvement d'oscillation F11 du levier 11, et donc la productivité du métier à tisser M.

Lorsque le galet 24A est rattaché à la portion d'attache 122A, la surface de contact S242 est située en regard du rebord 124. Le rebord 124 et la surface de contact S242 délimitent un volume intermédiaire V124. Dans l'exemple illustré, le rebord 124 présente une forme de portion de cylindre de section circulaire centré sur l'axe de galet A24 lorsque le galet 24A est rattaché à la portion d'attache 122A. Autrement dit le rebord 124 est concentrique avec la surface de contact S242, et le volume intermédiaire V124 présente une largeur constante mesurée radialement à l'axe de galet A24.

Deux trous 126 sont ménagés au travers de la portion d'attache 122A à proximité du rebord 124, c'est-à-dire plus près du rebord 124 que de l'alésage 118. Chaque trou 126, centré sur un axe parallèle à l'axe principal A11, permet le passage d'un organe de fixation 282 du dispositif d'attache 28, qui est ici un autre rivet, dit « de levier ».

On décrit à présent le dispositif d'attache 28, qui relie le galet suiveur 24A à la portion d'attache 122A du corps 110 du levier 11. Outre les rivets de galet 280 et les rivets de levier 282 déjà introduits, le dispositif d'attache 28 comprend une attache intérieure 28A et une attache extérieure 28B. L'attache intérieure 28A reliée au galet suiveur 24A est située du côté de l'autre galet suiveur 24B par rapport à la bague intérieure 240 du galet suiveur 24A, tandis que l'attache extérieure 28B reliée au galet suiveur 24A est située du côté opposé à l'autre galet suiveur 24B par rapport à la bague intérieure 240 du galet suiveur 24A. L'attache intérieure 28A comprend un flasque intérieur 30, tandis que l'attache extérieure 28B comprend un flasque extérieur 32 et un flasque entretoise 34. Le galet suiveur 24A est monté en chape entre le flasque intérieur 30 de l'attache intérieure 28A et le flasque extérieur 32 de l'attache extérieure 28B. Dans le premier mode de réalisation, le dispositif d'attache 28 comprend aussi des entretoises 36, qui sont chacune ménagées dans une plaque et sont présentent ici chacune une forme de bague, avec une épaisseur E36 et une surface périphérique S36.

Les flasques intérieur 30 et extérieur 32 sont chacun ménagés dans une plaque d'un matériau rigide tel que de l'acier, et présentent chacun une forme sensiblement triangulaire, avec des bords et des coins arrondis. Pour chacun des flasques intérieur et extérieur 30 et 32, l'un des sommets de triangle définit une portion avant, référencée respectivement 302 et 322, chacune des portions avant 302 et 322 comprenant deux trous avants 286 destinés au passage des rivets de galet 280. Par « avant », on entend que les portions 302 et 322 sont dirigées vers le galet suiveur 24A à l'opposé de la portion centrale 116 du corps 110 du levier 11 lorsque le dispositif d'attache 28 est assemblé au corps 110 du levier 11. Le galet suiveur 24A est fixé aux flasques intérieur 30 et extérieur 32 au moyen des rivets de galet 280, qui sont un exemple de dispositif de fixation du galet suiveur 24A aux flasques intérieur 30 et extérieur 32.
Le flasque intérieur 30 comprend une face interne 30A et une face externe 30B, opposée à la face interne 30A. De façon analogue, flasque extérieur 32 comprend une face interne 32A et une face externe 32B opposée à la face interne 32A. Lorsque les flasques intérieur 30 et extérieur 32 sont assemblés au galet 24A au moyen des rivets de galet 280, les faces internes 30A et 32A sont en regard l'une de l'autre et sont en appui plan sur plan sur les flancs 246 du galet suiveur 24A, la bague interne 240 étant alors fixe par rapport aux flasques intérieur 30 et extérieur 32, tandis que la bague extérieure 242 reste mobile en rotation par rapport à la bague intérieure 240 autour de l'axe de galet A24. Autrement dit les mouvements de la bague extérieure 242 ne sont pas gênés par les flasques intérieur 30 ou extérieur 32 et le galet suiveur 24A est monté en chape entre les attaches intérieure 28A et extérieure 28B. Le flasque intérieur 30 comprend, à l'opposé de la portion avant 302, un rebord 304 qui délimite une portion arrière 306 du flasque extérieur 30. En configuration assemblée du dispositif d'attache 28, le rebord 304 du flasque intérieur 30 est situé en regard du rebord 124 de la portion d'attache 122A.

Le flasque extérieur 32 comprend, à l'opposé de la portion avant 322, un rebord 324 qui délimite une portion arrière 326 du flasque extérieur 32. Deux trous arrière 288 sont ménagés dans la portion arrière 326 du flasque extérieur 32 au voisinage du rebord 324, les trous arrière 288 étant destinés au passage des rivets de levier 282.

Le flasque extérieur 32 comprend aussi, entre les portions avant 322 et arrière 326, une portion intermédiaire 328, dans laquelle sont ménagés deux trous intermédiaires 290. Lorsque le flasque extérieur 32 est, d'une part, relié au galet 24A et, d'autre part, relié à la portion d'attache 122A, les trous intermédiaires 290 débouchent, du côté de la face interne 32A, dans le volume intermédiaire V124.

Le flasque intérieur 30 comprend aussi des trous intermédiaires 291, qui sont alignés avec les trous intermédiaires 290 du flasque extérieur 32 dans la configuration assemblée du dispositif d'attache 28 et qui sont destinés au passage d'organes de fixation 284, qui sont ici des rivets dits « de chape ».

Le flasque entretoise 34 est ménagé dans une plaque d'un matériau rigide tel que de l'acier et comprend une face interne 34A et une face externe 34B opposée à la face interne 34A. Lorsque le dispositif d'attache 28 est assemblé, la face externe 34B est orientée vers le flasque extérieur 32. Les deux faces 34A et 34B définissent entre elles un épaisseur E34 du flasque entretoise 34. Le flasque entretoise 34 comprend aussi un rebord avant 342, qui est orienté vers le galet 24A et à l'opposé de la portion centrale 116 du levier 11 en configuration assemblée du galet 24A, et un rebord arrière 344, à l'opposé du rebord avant 342. On définit aussi une portion avant 346 et une portion arrière 348 du flasque entretoise 34 comme étant des portions du flasque entretoise 34 comprenant respectivement le rebord avant 342 ou le rebord arrière 344.

La portion arrière 348 du flasque entretoise 34 est interposée entre le flasque extérieur 32 et la portion d'attache 122A. Plus précisément, la face externe 34B du flasque entretoise 34 est en appui plan sur plan sur la face interne 32A du flasque extérieur 32, tandis que la face interne 34A du flasque entretoise 34 est en appui plan sur plan sur la face 112 du corps 110 du levier 11. En résultat, le galet suiveur 24A se trouve décalé, parallèlement à l'axe de galet A24, par rapport au plan médian P11.

La portion arrière 348 comprend des trous 350, ménagés au travers du flasque entretoise 34 et destinés au passage des rivets de levier 282. Ainsi, en configuration assemblée du dispositif d'attache 28, les trous 126 de la portion d'attache 122A, les trous 350 du flasque entretoise 34 et les trous arrière 288 du flasque extérieur 32 sont alignés de manière à permettre le passage des rivets de levier 282.

On définit un flanc interne 246A du galet 24A comme étant celui des deux flancs 246 situé du côté du flasque intérieur 30. La position du flanc interne 246A par rapport au plan médian P11 dépend de l'épaisseur E34 du flasque entretoise 34.

Ainsi, selon la configuration des pistes 22A et 22B, l'épaisseur E34 du flasque entretoise 34 est choisie pour que le galet 24A, en appui sur la piste 22A de la came 22, n'interfère pas avec la piste 22B, et de façon analogue pour que le galet 24B, en appui sur la piste 22B, n'interfère pas avec la piste 22A. En particulier, il ne faut pas que la surface de contact S242 ou le flanc interne 246A du galet 24A entrent en contact avec la piste 22B.

Selon des exemples, l'épaisseur E34 du flasque entretoise 34 est supérieure ou égale à la moitié de l'épaisseur E24 du galet suiveur 24A, de manière que le galet 24A est entièrement situé d'un même côté du plan médian P11.

En fonction de la face 112 ou 114 du corps 110 sur laquelle le flasque entretoise 34 est en appui, le décalage du galet suiveur 24A par rapport au plan médian P11 se fait dans un sens ou dans l'autre. Plus généralement, on comprend que deux dispositif d'attache 28 identiques peuvent être utilisés pour attacher les deux galets suiveurs 24A et 24B, le positionnement du flasque entretoise 34 sur l'une ou l'autre des faces 112 ou 114 du corps 110 permettant de décaler les galets 24A ou 24B d'un côté ou de l'autre du plan médian P11. Les pièces des dispositifs d'attache 28 peuvent ainsi être fabriquées en série, ce qui réduit les coûts de fabrication.

Dans le premier mode de réalisation, la portion avant 346 du flasque entretoise 34 s'étend dans le volume intermédiaire V124 au-delà du rebord 124 de la portion d'attache 124A, le rebord avant 342 étant situé en regard de la surface de contact S242 du galet 24A. La portion avant 346 comprend des trous 352, qui sont alignés avec les trous intermédiaires 290 du flasque extérieur 32, de manière à permettre le passage des rivets de chape 284 du dispositif d'attache 28. En configuration assemblée du dispositif d'attache 28, le flasque entretoise 34 est fixé au flasque extérieur 32 au moyen des rivets de chape 284.

Au niveau de chaque rivet de chape 284, une entretoise 36, est interposée entre le flasque intérieur 30 et l'attache intérieure 28A, de manière que la face interne 30A du flasque intérieur 30 et la face interne 32A du flasque extérieur 32 sont parallèles entre elles et séparés d'une distance égale, aux jeux d'assemblage près, à l'épaisseur E24 du galet suiveur 24A. Autrement dit, les rivets de chape 284 solidarisent au flasque intérieur 30 de l'attache intérieure 28A et au flasque extérieur 32 de l'attache extérieure 28B, le flasque entretoise 34 de l'attache extérieure 28B et chaque entretoise 36.

Dans le premier mode de réalisation, le dispositif d'attache 28 comprend deux rivets de chape 284 et deux entretoises 36, qui sont ici des bagues. La distance entre le flasque intérieur 30 et le flasque extérieur 32 étant, ou outre, égale à l'épaisseur E24 du galet suiveur, l'épaisseur E36 des entretoises 36 est donc égale à l'épaisseur E24 du galet 24A moins l'épaisseur E34 du flasque entretoise 34.

Le galet 24A est ainsi pris en chape par les flasques intérieur 30 et extérieur 32 assemblés par les rivets de galet 280. Les flasques intérieur 30 et extérieur 32 sont aussi reliés par les rivets de chape 284, qui contribuent à rigidifier et à renforcer l'assemblage des flasques intérieur 20 et extérieur 32 au galet 24A. Autrement dit, les attaches intérieure 28A et extérieure 28B sont assemblées au moyen des rivets de chape 284.

Le dispositif d'attache 28 selon l'invention permet ainsi de relier le galet suiveur 24A au corps 110 du levier de sortie 11 sans qu'un logement spécifique destiné à accueillir le galet suiveur ne doive être ménagé dans les faces 112 ou 114 du corps 110 et sans qu'un flasque ne soit usiné par fraisage dans le corps 110, comme c'est le cas dans l'état de la technique. De plus, les attaches intérieure 28A et extérieure 28B comprennent chacune une ou plusieurs plaques, à savoir les flasques intérieur, extérieur et entretoise, qui sont en appui plan sur plan entre elles et qui sont assemblées les unes aux autres par des rivets 280 et 284.

Des usinages simples, tels que des alésages ou des chanfreins, sont ménagés dans le corps 110, en particulier pour la fabrication des trous de passage des rivets 282. Optionnellement, les surfaces 112 et 114 peuvent comprendre des zones rectifiées, notamment la portion d'attache 124A, pour permettre une bonne géométrie du levier de sortie 11.

On décrit à présent un procédé d'assemblage du galet 24A au corps 110 du levier de sortie 11, sachant que le même procédé d'assemblage est valable pour le galet 24B.

Le procédé d'assemblage comprend une première étape, consistant à fournir le galet 24A déjà assemblé, le corps 110 du levier 11 et les diverses pièces du dispositif d'attache 28, à savoir les flasques intérieur 30 et extérieur 32, le flasque entretoise 34 et les entretoises 36.

Le procédé d'assemblage comprend ensuite une deuxième étape consistant à empiler, dans un outil de positionnement, non représenté et configuré à cet effet, le flasque intérieur 30, les entretoises 36, le flasque entretoise 34 et le flasque extérieur 32, de manière à faire coïncider tous les trous destinés au passage des rivets respectifs. En en particulier, les trous avant 286 destinés au passage des rivets de galet 280, les trous 288 et 350 destinés au passage des rivets de levier 282 et les trous 290, 352 et 291 destinés au passage des rivets de chape 284.

Le procédé d'assemblage comprend ensuite une troisième étape dite « de rivetage » consistant à insérer les rivets de chape dans les trous 290, 352 et 291 correspondants puis à déformer les rivets de chape sous presse, de manière que le flasque intérieur 30, les entretoises 36, le flasque entretoise 34 et le flasque extérieur 32 sont solidarisés les uns aux autres et forment ensemble un sous-ensemble d'attache.

Au cours du rivetage, les rivets, qui ont une longueur initiale légèrement supérieure à l'épaisseur de l'empilage des pièces, se déforment plastiquement dans la direction radiale à l'axe du trou, ce qui augmente le serrage des rivets dans les trous de passage. Les rivets se déforment également au niveau de leurs extrémités de façon à combler partiellement un chanfrein des trous de passage 291 et 290 des flasques intérieur 30 et extérieur 32.

Lorsque des rivets, tels les rivets de galet 280, de levier 282 ou de chape 284, sont utilisés, leur mise en place se fait préférentiellement à température ambiante, selon un procédé de rivetage dit « à froid ». À la différence du rivetage à chaud ou d'autres procédés d'assemblage à chaud tels que le soudage, le rivetage à froid ne génère pas d'échauffement localisé dans les pièces à assembler, ce qui évite l'apparition de déformations des pièces au cours de l'opération d'assemblage.

Le procédé d'assemblage comprend ensuite une quatrième étape consistant à positionner le flasque extérieur 32 du sous-ensemble d'attache sur la portion d'attache 122A correspondante, de manière à faire coïncider les trous 288, 350 et 126 de passage des rivets de levier 282. Dans l'exemple illustré, le flasque extérieur 32 est placé du côté de la face 112 du corps 110.

Le procédé d'assemblage comprend ensuite une cinquième étape consistant à insérer les rivets de levier 282 dans les trous 288, 350 et 126 de passage correspondants puis à déformer les rivets de levier 282 sous presse de manière à solidariser le sous-ensemble d'attache à la portion d'attache 122A correspondante.

Le procédé d'assemblage comprend ensuite une sixième étape consistant à positionner le galet suiveur 24A entre les flasques intérieur 30 et extérieur 32 du dispositif d'attache 28 correspondant, de manière à faire coïncider les trous de passage 248 et 286 des rivets de galet 280.

Le procédé d'assemblage comprend ensuite une septième étape consistant à insérer les rivets de galets 280 dans les trous 248 et 286 correspondants puis à déformer les rivets de galet 280 sous presse de manière à solidariser le galet 24A au sous-ensemble d'attache.

Optionnellement, lors de la première étape, l'alésage 18 et les trous avant 286, ménagés respectivement dans le corps 110, dans le flasque intérieur 30 et dans le flasque extérieur 32, ne sont encore qu'à l'état d'ébauche, auquel cas le procédé d'assemblage comprend une étape intermédiaire entre les cinquième et sixième étapes, consistant à effectuer une reprise d'usinage des trous 286 et de l'alésage 118, de manière qu'à l'issue de la septième étape, l'axe principal A11 du corps 11 et l'axe de galet A24 du galet suiveur 24A sont parallèles entre eux et distants d'une valeur précise.

Cette reprise d'usinage permet de compenser les éventuels écarts de géométrie liés à l'assemblage ou aux tolérances géométriques des pièces du levier de sortie 11.

Dans les deuxième à cinquième modes de réalisation, les éléments analogues à ceux du premier mode de réalisation portent les mêmes références et fonctionnent de la même façon. Dans ce qui suit, on décrit principalement les différences entre chaque mode de réalisation et le ou les précédents.

Une des principales différences du deuxième mode de réalisation avec le premier mode de réalisation est que le flasque entretoise 34 n'est pas traversé par les rivets de chape 284 qui assemblent le flasque intérieur 30 et le flasque extérieur 32, et que les entretoises 36 sont en appui sur la face interne 32A du flasque extérieur 32 et sur la face interne 30A du flasque intérieur 30.

Le flasque entretoise 34 comprend une face interne 34A et une face externe 34B opposée à la face interne 34A. Lorsque le dispositif d'attache 28 est assemblé, la face externe 34B est orientée vers le flasque extérieur 32. Le flasque entretoise 34 comprend aussi un rebord avant 342, qui est orienté vers le galet 24A en configuration assemblée du galet 24A, et un rebord arrière 344, à l'opposé du rebord avant 342.

On définit aussi une portion arrière 348 du flasque entretoise 34 comme comprenant le rebord arrière 344.

La portion arrière 348 est interposée entre le flasque extérieur 32 et la portion d'attache 122A. Plus précisément, la face externe 34B du flasque entretoise 34 est en appui plan sur plan sur la face interne 32A du flasque extérieur 32, tandis que la face interne 34A du flasque entretoise 34 est en appui plan sur plan sur la face 112 du corps 110 du levier 11. En résultat, le galet suiveur 24A se trouve décalé par rapport au plan médian P11.

La portion arrière 348 comprend des trous 350, ménagés au travers du flasque entretoise 34 et destinés au passage des rivets de levier 282. Ainsi, en configuration assemblée du galet 24A, les trous 126 de la portion d'attache 122A, les trous 350 du flasque entretoise 34 et les trous arrière 288 du flasque extérieur 32 sont alignés de manière à permettre le passage des rivets de levier 282.

Dans le deuxième mode de réalisation, le flasque entretoise 34 ne comprend pas de portion avant s'étendant dans le volume interne V124. Le rebord avant 342 est ici affleurant avec le rebord 124 de la portion d'attache 122A.

En conséquence, les entretoises 36, interposées entre l'attache extérieure 28B et le flasque intérieur 30, sont directement en appui sur la face interne 32A du flasque extérieur 32 et sur la face interne 30A du flasque extérieur 30. Les entretoises 36 sont chacune ménagées dans une plaque et ont ici chacune une forme de bague, qui présentent une épaisseur E36. L'épaisseur E36 est choisie de façon que les flasques intérieur 30 et extérieur 32 sont parallèles entre eux et sont séparés d'une distance égale, aux jeux d'assemblage près, à l'épaisseur E24 du galet suiveur 24A. En d'autres termes, l'épaisseur E36 est ici choisie égale à l'épaisseur E24.

La structure du levier 11 selon le second mode de réalisation simplifie l'assemblage du levier 11, mais en diminue la rigidité, le flasque entretoise 34 ne réalisant pas de liaison entre les rivets de chape et les rivets de levier 282.

Une des principales différences du troisième mode avec les autres modes de réalisation est que l'attache intérieure 28A comprend un flasque de renfort 70, qui est situé du côté du flasque intérieur 30 et qui relie les rivets de chape 284 aux rivets de levier 282.

Le flasque de renfort 70 est ménagé dans une plaque d'un matériau rigide tel que de l'acier et comprend une face interne 70A et une face externe 70B opposée à la face interne 70A. Lorsque le dispositif d'attache 28 est assemblé, la face interne 70A est orientée vers le flasque extérieur 32.

La face interne 70A du flasque de renfort 70 est conjointement en appui plan sur plan sur la face externe 30B du flasque intérieur 30 et en appui plan sur plan sur la face 114 de la portion d'attache 122A, autrement dit sur la face du corps 110 du levier 11 orientée à l'opposé du flasque entretoise 34.

Le flasque de renfort 70 est, d'une part, fixé à la portion d'attache 122A au moyen des rivets de levier 282 et, d'autre part, fixé au flasque intérieur 30 au moyen des rivets de chape 284. Une telle structure du levier 11 est plus rigide, mais plus encombrante, par rapport aux modes de réalisations précédents.

Dans le troisième mode de réalisation, une épaisseur du flasque interne 30 est ajustée de manière que la surface externe 30B du flasque intérieur 30 est située dans le même plan que la face 114 du corps 110, de manière que la face interne 70B du flasque de renfort 70 est conjointement en appui sur la face 114 et sur la face externe 30B du flasque intérieur 30.

Avantageusement, le flasque de renfort 70 présente un contour identique à un contour du flasque entretoise 34. Avantageusement encore, le flasque de renfort 70 présente une épaisseur égale à l'épaisseur E34 au flasque entretoise 34, autrement dit le flasque de renfort 70 est identique au flasque entretoise 34 ce qui permet de fabriquer les pièces en série, de réduire les coûts de production et de faciliter l'assemblage.

Dans le troisième mode de réalisation, le flasque de renfort 70 est fourni avec les autres pièces du dispositif d'attache 28 au cours de la première étape du procédé d'assemblage, puis est mis en place dans l'outil de positionnement au cours de la deuxième étape conjointement au flasque intérieur 30.

Une des principales différences entre le quatrième mode de réalisation et les modes de réalisation précédents est que les entretoises 36, qui ont chacune une forme de bague avec un seul trou de passage des rivets 284 dans les modes précédents, sont remplacées par une entretoise 436 ménagée dans une plaque dans laquelle plusieurs trous de passage des rivets 284 sont ménagés. De plus, les rivets de chape 284 sont plus nombreux, ici au nombre de quatre au lieu de deux rivets de chape 284 dans les modes précédents. L'entretoise 436 comprend ainsi quatre trous de passage des rivets de chape 284, comme détaillé ci-après.

Le flasque entretoise 34 et le flasque extérieur 32 sont assemblés au moyen de deux des quatre rivets de chape 284, ces deux rivets de chape 284 formant un groupe dit « avant » de rivets de chape 284.

Le flasque de renfort 70 et le flasque intérieur 30 sont assemblés au moyen de deux autres rivets de chape 284, qui sont différents des rivets du groupe avant et qui forment un groupe dit « arrière » de rivets de chape 284.

L'entretoise 436 comprend une portion avant 438, dans laquelle sont ménagés des trous 439 de passage des rivets de chape 284 du groupe avant. L'entretoise 436 comprend une portion arrière 440, dans laquelle sont ménagés des trous 441 de passage des rivets de chape 284 du groupe arrière.

Le flasque intérieur 30 est en appui sur l'attache extérieure 28B par l'intermédiaire de l'entretoise 436. Plus précisément, l'entretoise 436 est interposée entre la face interne 30A du flasque intérieur 30 et la face interne 34A du flasque entretoise 34, de manière que la face interne 30A du flasque intérieur 30 et la face interne 32A du flasque extérieur 32 sont parallèles entre elles et séparées d'une distance égale, aux jeux d'assemblage près, à l'épaisseur E24 du galet suiveur 24A.

Grâce à l'entretoise 436 ménagée dans une plaque et aux rivets de chape 284 plus nombreux, le levier de sortie 11 du quatrième mode est plus rigide que les leviers 11 des modes précédents. D'autre part, le levier 11 du quatrième mode présente une structure sensiblement symétrique par rapport au plan médian P11, ce qui réduit les déformations de flexion du dispositif d'attache 28 de part et d'autre du plan médian P11 lorsque les galets 24A et 24B sont en appui sur les pistes 22A et 22B de la came 22.

Une des principales différences entre le cinquième mode de réalisation et les précédents modes de réalisation est que le levier 11 du cinquième mode comprend un flasque de renfort 70 mais ne comprend pas d'équivalent aux entretoises 36 ou 436 des précédents modes de réalisation.

Dans le cinquième mode de réalisation, l'attache intérieure 28A comprend les flasques intérieur 30 et de renfort 70, tandis que l'attache extérieure 28B comprend les flasques extérieur 32 et entretoise 34.

La face interne 70A du flasque de renfort 70 est en appui plan sur plan sur la face externe 30B du flasque intérieur 30, les flasques intérieur 30 et de renfort 70 étant assemblés au moyen du groupe arrière de rivets de chape 284.

La face externe 34B du flasque entretoise 34 est en appui plan sur plan sur la face interne 32B du flasque extérieur 32, les flasques entretoise 34 et extérieur 32 étant assemblés au moyen du groupe avant de rivets de chape 284.

Dans le cinquième mode, chaque rivet de chape 284 ne solidarise l'un à l'autre que deux éléments ménagés dans des plaques, à savoir dans un premier cas le flasque entretoise 34 et le flasque extérieur 32, et dans un deuxième cas le flasque de renfort 70 et le flasque intérieur 30. Les rivets de chape 284 présentent ainsi une longueur, mesurée parallèlement à l'axe principal A11, inférieure à une longueur des rivets 284 des modes précédents.

Lors de la fabrication du dispositif d'attache 28, les attaches intérieure et extérieure 28A et 28B sont tout d'abord assemblées séparément au moyen des rivets de chapes 284, avant de procéder à la troisième étape d'assemblage d'écrite pour le premier mode de réalisation.

Le levier 11 du cinquième mode de réalisation, sans entretoise, est moins rigide que le levier du quatrième mode, tout en permettant de conserver une bonne transmission des efforts au niveau de chacune des attaches intérieure 28A ou extérieure 28B lorsque les galets 24A et 24B sont en appui sur les pistes 22A et 22B de la came 22, ce qui réduit les déformations de flexion du dispositif d'attache 28 de part et d'autre du plan médian P11.

Plus généralement, quel que soit le mode de réalisation, les attaches intérieure 28A et extérieure 28B du dispositif d'attache 28 comprennent une ou plusieurs pièces ménagées dans des plaques. Le dispositif d'attache 28 comprend aussi, selon les cas, des entretoises 36 qui sont des bagues, ou bien une entretoise 436 ménagée dans une plaque, ou bien encore aucune entretoise. Les pièces du dispositif d'attache 28 sont ainsi faciles à produire, ce qui est économique.

Les différentes pièces du dispositif d'attache 28 sont en outre faciles à assembler, les pièces étant en appui plan les unes sur les autres et étant assemblées de préférence par rivetage à froid, ce qui réduit les risques de déformation géométrique du levier de sortie 11 à l'issue de l'assemblage.

Dans tous les modes de réalisation, les organes de fixation 280 utilisés pour fixer les flasques intérieur 30 et extérieur 32 au galet 24A sont des rivets. En variante non représentée, d'autres organes de fixation peuvent être utilisés, en particulier des organes de fixation réversibles tels qu'une vis et un écrou, ce qui permet si besoin de remplacer facilement une pièce défectueuse. Dans ce cas, la tête de la vis et l'écrou sont de préférence fraisés et reçus dans des logements complémentaires des flasques intérieur 30 et extérieur 32, pour ne pas rajouter de surépaisseur au dispositif d'attache 28 et risquer de toucher un levier de sortie voisin. Ainsi, le galet suiveur étant une pièce particulièrement sollicitée et présentant un risque de défaillance supérieur à celui des autres pièces du levier de sortie 11, les rivets de galet 280 peuvent remplacés par un opérateur.

Dans tous les modes de réalisation représentés, les éléments roulants 244 des galets 24A et 24B sont des rouleaux. L'invention peut également être mise en oeuvre avec des galets dont les éléments roulants 244 sont des billes.

Les modes de réalisation et les variantes mentionnées ci-dessus peuvent être combinés entre eux pour générer de nouveaux modes de réalisation de l'invention dans le cadre des revendications suivantes.

## Revendications

1. Levier de sortie (11) à galets suiveurs de mécanique d'armure à cames, le levier de sortie comprenant un corps (110) et deux galets suiveurs (24A, 24B), dans lequel :
- le corps du levier de sortie, ménagé dans une plaque avec deux faces (112, 114) opposées définissant entre elles un plan médian (P11), comprend une portion centrale (116) avec deux surfaces opposées (117A, 117B), dans laquelle est ménagé un alésage (118) centré sur un axe principal (A11) recevant un palier (120), deux portions d'attache (122A, 122B) et une extension (15), les portions d'attaches et l'extension étant ménagées radialement à l'axe principal et étant distincts les unes des autres,
- chaque galet suiveur (24A, 24B) est décalé du plan médian (P11) suivant l'axe principal (A11) et comprend une bague intérieure (240), une bague extérieure (242) et des éléments roulants (244) interposés entre les bagues intérieure et extérieure de manière que la bague extérieure est libre en rotation par rapport à la bague intérieure autour d'un axe de galet (A24) parallèle à l'axe principal (A11), la bague extérieure présentant une surface de contact (S242), qui est radiale à l'axe de galet (A24) et destinée au contact avec une piste (22A, 22B) d'une came (22) de la mécanique d'armure (10),
- chaque galet suiveur (24A, 24B) est relié à une portion d'attache (122A, 122B) respective au moyen d'un dispositif d'attache (28) respectif, chaque dispositif d'attache comprenant une attache intérieure (28A) située du côté de l'autre galet suiveur (24B, 24A) par rapport à la bague intérieure et une attache extérieure (28B) située du côté opposé à l'autre galet suiveur (24B, 24A) par rapport à la bague intérieure, les attaches intérieure et extérieure comprenant chacune un ou plusieurs flasques (30, 32, 34 ; 30, 32, 34, 70), qui sont chacun ménagés dans une plaque, qui sont en appui plan sur plan entre eux et qui sont assemblés les uns aux autres,
- chaque galet suiveur (24A, 24B) est monté en chape entre un flasque intérieur (30) d'une attache intérieure (28A) et un flasque extérieur (32) d'une attache extérieure (28B) et fixé aux flasques intérieur (30) et extérieur (32) par un dispositif de fixation (280),
- les attaches extérieures (28B) sont assemblées à la portion d'attache (122A, 122B) correspondante par des rivets de levier (282), l'attache extérieure (28B) étant en appui plan sur plan sur l'une des faces (112, 114) de la portion d'attache correspondante (122A, 122B) de manière que les surfaces de contact (S242) des deux galets suiveurs sont situées de part et d'autre du plan médian (P11),
au moins l'un des galets suiveurs, dit premier galet suiveur, est fixé sur une première des deux portions d'attache (122A, 122B) au moyen d'un premier dispositif d'attache (28), **caractérisé**
**en ce que** la première portion d'attache (122A, 122B) du levier de sortie (11) comprend deux surfaces opposées (123A, 123B) qui sont reliées entre elles par un rebord (124) et qui sont séparées l'une de l'autre d'une distance égale à une épaisseur de la portion centrale (116),
**en ce que** chacune des deux surfaces (123A, 123B) de la première portion d'attache (122A) est coplanaire avec une surface (117A, 117B) respective de la portion centrale (116), et en ce que la surface de contact (S242) du premier galet suiveur est située en regard du rebord (124) de la première portion d'attache (122A).

2. Levier de sortie (11) selon la revendication précédente, **caractérisé en ce que** les attaches intérieure (28A) et extérieure (28B) du premier dispositif d'attache (28) sont assemblées au moyen de rivets de chape (284).

3. Levier de sortie (11) selon la revendication précédente, **caractérisé en ce que** l'attache extérieure (28B) comprend un flasque extérieur (32) et un flasque entretoise (34), les flasques extérieur et entretoise étant chacun ménagés dans une plaque respective et étant assemblés entre eux par rivetage, le flasque extérieur (32) présentant une face interne (32A) et une face externe (32B) opposée, la face interne du flasque extérieur étant en appui sur le premier galet suiveur (24A, 24B), le flasque extérieur (32) étant fixé au premier galet suiveur par le dispositif de fixation (280), tandis que le flasque entretoise (34) est assemblé à la première portion d'attache (122A, 122B) au moyen des rivets de levier (282), le flasque entretoise (34) étant interposé entre le flasque extérieur (32) et la première portion d'attache (122A, 122B) de manière à décaler la face interne (32A) du flasque extérieur par rapport à une première des deux surfaces (123B, 123A) de la première portion d'attache.

4. Levier de sortie (11) selon l'une quelconque des revendications précédentes, **caractérisé en ce que** l'attache intérieure (28A) du premier système d'attache (28) comprend un flasque intérieur (30), qui est ménagé dans une plaque et qui présente une face externe (30B) et une face interne (30A) opposée et qui est en appui sur le premier galet suiveur (24A, 24B), le flasque intérieur étant fixé au premier galet suiveur au moyen du dispositif de fixation (280), et **en ce que** le flasque intérieur (30) est en appui sur l'attache extérieure (28B) par l'intermédiaire d'une ou plusieurs entretoises (36 ; 436) ménagées dans une plaque, de manière que la face interne (30A) du flasque intérieur (30) et la face interne (32A) du flasque extérieur (32) sont parallèles entre elles et séparées d'une distance égale, aux jeux d'assemblage près, à l'épaisseur (E24) du premier galet suiveur.

5. Levier de sortie (11) selon la revendication 4, **caractérisé en ce que** chaque entretoise (36 ; 436) est solidarisée au flasque intérieur (30) et à l'attache extérieure (28B) au moyen d'un ou plusieurs rivets de chape (284).

6. Levier de sortie (11) selon la revendication 5, **caractérisé en ce que** le ou les plusieurs rivets de chape (284) solidarisent au flasque intérieur (30) de l'attache intérieure (28A) et au flasque extérieur (32) de l'attache extérieure (28B), le flasque entretoise (34) de l'attache extérieure (28B) et chaque entretoise (36 ;436).

7. Levier de sortie (11) selon l'une quelconque des revendications précédentes, **caractérisé en ce que** l'attache intérieure (28A) comprend un flasque de renfort (70), qui est ménagé dans une plaque et présente une face interne (70A) et une face externe (70B) opposée, la face interne du flasque de renfort étant conjointement en appui sur la face externe (30B) du flasque intérieur (30) et sur une deuxième des deux surfaces (123A, 123B) de la première portion d'attache (122A, 122B), le flasque de renfort (70) étant, d'une part, fixé à la première portion d'attache au moyen des rivets de levier (282) et, d'autre part, fixé au flasque intérieur (30) au moyen des rivets de chape (284).

8. Levier de sortie (11) selon l'une quelconque des revendications précédentes, **caractérisé en ce que** les deux galets suiveurs (24A, 24B) sont montés à une portion d'attache (122A, 122B) respective au moyen d'un dispositif d'attache (28) respectif, chaque dispositif d'attache étant similaire, de préférence identique, au premier dispositif d'attache (28).

9. Levier de sortie (11) selon la revendication 8, **caractérisé en ce que** les flasques extérieurs (32) des deux dispositifs d'attache (28) sont identiques.

10. Levier de sortie (11) selon l'une quelconque des revendications 8 ou 9, **caractérisé en ce que** les flasques intérieurs (30) des deux dispositifs d'attache (28) sont identiques.

11. Levier de sortie (11) selon l'une quelconque des revendications 8 à 10, **caractérisé en ce que** chaque dispositif d'attache (28) comprend deux organes de fixation (280), tels que des rivets, chaque bague intérieure (240) présente une forme de disque centré sur l'axe de galet (A24) respectif et définit un demi-disque interne (240A) et un demi-disque externe (240B) complémentaire du demi-disque interne, le demi disque interne de chaque galet suiveur (24A, 24B) étant situé du côté de l'autre galet suiveur (24B, 24A), et **en ce que** les organes de fixation (280) de chaque galet suiveur sont ménagés dans le demi-disque externe (240B) de ce galet suiveur.

12. Machine de formation de la foule de type mécanique d'armure à cames (10), **caractérisée en ce qu'**elle comprend un levier de sortie (11) selon l'une quelconque des revendications précédentes.

13. Métier à tisser (M) comprenant une machine de formation de la foule de type mécanique d'armure à cames (10), **caractérisé en ce que** la machine de formation de la foule est selon la revendication précédente.

14. Procédé d'assemblage d'un levier de sortie (11) conforme à l'une quelconque des revendications 4 à 6, **caractérisé en ce que** le procédé comprend, pour au moins l'un des galets (24A, 24B), les étapes consistant à :
a) empiler, dans un outil de positionnement, le flasque intérieur (30), les entretoises (36 ; 436), le flasque entretoise (34) et le flasque extérieur (32), de manière à faire coïncider tous les trous de passage (291, 352, 290 ; 439, 441) des rivets de chape (284) ;
b) insérer les rivets de chape (284) dans les trous de passage correspondants puis déformer les rivets de chape sous presse de manière à ce que le flasque intérieur (30), l'entretoise (36 ; 436), le flasque entretoise (34) et le flasque extérieur (32) sont solidarisés les uns aux autres et forment ensemble un sous-ensemble d'attache ;
c) positionner l'attache extérieure (28B) du sous-ensemble d'attache sur la portion d'attache (122A) correspondante de manière à faire coïncider les trous de passage (126, 350, 288) des rivets de levier (282) ;
d) insérer les rivets de levier (282) dans les trous de passage (126, 350, 288) correspondants puis déformer les rivets de levier (282) sous presse de manière à solidariser le sous-ensemble d'attache à la portion d'attache (122A, 122B) correspondante ;
e) positionner le galet suiveur (24A, 24B) entre les flasques intérieur (30) et extérieur (32) du dispositif d'attache (28) correspondant, de manière à faire coïncider les trous de passage (286, 248) du dispositif de fixation (280), et
f) insérer le dispositif de fixation (280) dans les trous de passage (286, 248) correspondants puis déformer le dispositif de fixation (280) sous presse de manière à solidariser le galet suiveur au sous-ensemble d'attache (28).

15. Procédé d'assemblage selon la revendication précédente d'assemblage d'un levier de sortie (11) conforme à la revendication 7, **caractérisé en ce qu'**à l'étape a), le flasque de renfort (70) est mis en place conjointement au flasque intérieur (30), et **en ce qu'**à l'issue de l'étape b), le flasque de renfort (70) fait partie du sous-ensemble d'attache.

16. Procédé d'assemblage selon l'une quelconque des revendications 14 ou 15, **caractérisé en ce que** le procédé d'assemblage comprend une étape intermédiaire (g), postérieure à l'étape d) et antérieure à l'étape e), l'étape intermédiaire (g) consistant à effectuer une reprise d'usinage des trous (286) de passage des dispositifs de fixation (280) et de l'alésage (118) du corps (110) du levier (11).

## Patentansprüche

1. Ausgangshebel (11) mit Nachlaufrollen für Schaftmaschinennockenmechanik, der Ausgangshebel umfassend einen Körper (110) und zwei Nachlaufrollen (24A, 24B), wobei:
- der Körper des Ausgangshebels, ausgebildet in einer Platte mit zwei gegenüberliegenden Flächen (112, 114), die untereinander eine Mittelebene (P11) definieren, einen zentralen Abschnitt (116) mit zwei gegenüberliegenden Flächen (117A, 117B) umfasst, in dem eine auf einer Hauptachse (A11) zentrierte Bohrung (118) ausgebildet ist, die ein Lager (120), zwei Befestigungsabschnitte (122A, 122B) und eine Verlängerung (15) aufnimmt, wobei die Befestigungsabschnitte und die Verlängerung radial zu der Hauptachse ausgebildet sind und sich voneinander unterscheiden,
- jede Nachlaufrolle (24A, 24B) entlang der Hauptachse (A11) aus der Mittelebene (P11) versetzt ist und einen Innenring (240), einen Außenring (242) und Wälzkörper (244) umfasst, die zwischen den Innen- und den Außenring eingefügt sind, sodass der Außenring in Bezug auf den Innenring um eine Rollenachse (A24), die parallel zu der Hauptachse (A11) ist, frei drehbar ist, der Außenring eine Kontaktfläche (S242) radial zu der Rollenachse (A24) aufweist und für den Kontakt mit einer Laufbahn (22A, 22B) eines Nockens (22) der Schaftmaschine (10) bestimmt ist,
- jede Nachlaufrolle (24A, 24B) mittels einer jeweiligen Befestigungsvorrichtung (28) mit einem jeweiligen Befestigungsabschnitt (122A, 122B) verbunden ist, wobei jede Befestigungsvorrichtung eine innere Befestigung (28A) umfasst, die sich auf der Seite der anderen Nachlaufrolle (24B, 24A) in Bezug auf den Innenring und eine äußere Befestigung (28B), die sich auf der gegenüberliegenden Seite der anderen Nachlaufrolle (24B, 24A) in Bezug auf den Innenring befindet, wobei die innere und die äußere Befestigung jeweils einen oder mehrere Flansche (30, 32, 34; 30, 32, 34, 70) umfassen, die jeweils in einer Platte ausgebildet sind, die planparallel zueinander anliegen und die miteinander verbunden sind,
- jede Nachlaufrolle (24A, 24B) zwischen einem inneren Flansch (30) einer inneren Befestigung (28A) und einem äußeren Flansch (32) einer äußeren Befestigung (28B) gabelförmig montiert ist und durch eine Befestigungsvorrichtung (280) an dem inneren (30) und dem äußeren (32) Flansch befestigt ist,
- die äußeren Befestigungen (28B) mit dem entsprechenden Befestigungsabschnitt (122A, 122B) durch Hebelnieten (282) verbunden sind, wobei die äußere Befestigung (28B) planparallel auf einer der Flächen (112, 114) des entsprechenden Befestigungsabschnitts (122A, 122B) aufliegt, sodass sich die Kontaktflächen (S242) der zwei Nachlaufrollen auf beiden Seiten der Mittelebene (P11) befinden, mindestens eine der Nachlaufrollen, die als erste Nachlaufrolle bezeichnet wird, mittels einer ersten Befestigungsvorrichtung (28) an einem ersten der beiden Befestigungsabschnitte (122A, 122B) befestigt ist, **dadurch gekennzeichnet, dass** der erste Befestigungsabschnitt (122A, 122B) des Ausgangshebels (11) zwei gegenüberliegende Oberflächen (123A, 123B) umfasst, die durch einen Rand (124) miteinander verbunden sind und die voneinander um einen Abstand getrennt sind, der gleich wie eine Stärke des mittleren Abschnitts (116) ist, dass jede der beiden Oberflächen (123A, 123B) des ersten Befestigungsabschnitts (122A) koplanar mit einer jeweiligen Oberfläche (117A, 117B) des Mittelabschnitts (116) ist, und dass die Kontaktfläche (S242) der ersten Nachlaufrolle gegenüber dem Rand (124) des ersten Befestigungsabschnitts (122A) angeordnet ist.

2. Ausgangshebel (11) nach dem vorherigen Anspruch, **dadurch gekennzeichnet, dass** die innere (28A) und die äußere (28B) Befestigung der ersten Befestigungsvorrichtung (28) mittels Gabelkopfnieten (284) zusammengefügt sind.

3. Ausgangshebel (11) nach dem vorherigen Anspruch, **dadurch gekennzeichnet, dass** die äußere Befestigung (28B) einen äußeren Flansch (32) und einen Abstandhalterflansch (34) umfasst, der Außen- und der Abstandhalterflansche jeweils in einer jeweiligen Platte ausgespart sind und durch Nieten miteinander verbunden sind, wobei der äußere Flansch (32) eine Innenseite (32A) und eine gegenüberliegende Außenseite (32B) aufweist, wobei die Innenseite des äußeren Flanschs an der ersten Nachlaufrolle (24A, 24B) anliegt, wobei der äußere Flansch (32) durch die Befestigungsvorrichtung (280) an der ersten Nachlaufrolle befestigt ist, während der Abstandhalterflansch (34) mittels der Hebelnieten (282) mit dem ersten Befestigungsabschnitt (122A, 122B) zusammengebaut ist, der Abstandhalterflansch (34) zwischen dem äußeren Flansch (32) und dem ersten Befestigungsabschnitt (122A, 122B) angeordnet ist, um die Innenfläche (32A) des äußeren Flanschs in Bezug auf eine erste der zwei Oberflächen (123B, 123A) des ersten Befestigungsabschnitts zu versetzen.

4. Ausgangshebel (11) nach einem der vorherigen Ansprüche, **dadurch gekennzeichnet, dass** die innere Befestigung (28A) des ersten Befestigungssystems (28) einen inneren Flansch (30) umfasst, der in einer Platte ausgebildet ist und eine Außenseite (30B) und eine gegenüberliegende Innenseite (30A) aufweist und der an der ersten Nachlaufrolle (24A, 24B) anliegt, wobei der innere Flansch mittels der Befestigungsvorrichtung (280) an der ersten Nachlaufrolle befestigt ist, und dass der innere Flansch (30) an der äußeren Befestigung (28B) über einen oder mehrere Abstandhalter (36; 436), die in einer Platte ausgespart sind, so dass die Innenseite (30A) des inneren Flanschs (30) und die Innenseite (32A) des äußeren Flanschs (32) parallel zueinander sind und durch einen Abstand getrennt sind, der bis auf die Montagespiele gleich der Dicke (E24) der ersten Nachlaufrolle ist.

5. Ausgangshebel (11) nach Anspruch 4, **dadurch gekennzeichnet, dass** jeder Abstandhalter (36; 436) mittels einer oder mehrerer Gabelkopfnieten (284) fest mit dem inneren Flansch (30) und der äußeren Befestigung (28B) verbunden ist.

6. Ausgangshebel (11) nach Anspruch 5, **dadurch gekennzeichnet, dass** der oder die mehreren Gabelkopfnieten (284) den Abstandhalterflansch (34) der äußeren Halterung (28B) und jeden Abstandhalter (36; 436) fest mit dem inneren Flansch (30) der inneren Halterung (28A) und dem äußeren Flansch (32) der äußeren Halterung (28B) verbinden.

7. Ausgangshebel (11) nach einem der vorherigen Ansprüche, **dadurch gekennzeichnet, dass** die innere Befestigung (28A) einen Verstärkungsflansch (70) umfasst, der in einer Platte ausgebildet ist und eine Innenseite (70A) und eine gegenüberliegende Außenseite (70B) aufweist, die Innenseite des Verstärkungsflanschs gemeinsam an der Außenseite (30B) des inneren Flanschs (30) und an einer zweiten der beiden Oberflächen (123A, 123B) des ersten Befestigungsabschnitts (122A, 122B) anliegt, wobei der Verstärkungsflansch (70) einerseits mittels der Hebelnieten (282) an dem ersten Befestigungsabschnitt befestigt ist und andererseits mittels der Gabelkopfnieten (284) an dem inneren Flansch (30) befestigt ist.

8. Ausgangshebel (11) nach einem der vorherigen Ansprüche, **dadurch gekennzeichnet, dass** die zwei Nachlaufrollen (24A, 24B) mittels einer jeweiligen Befestigungsvorrichtung (28) an einem jeweiligen Befestigungsabschnitt (122A, 122B) montiert sind, wobei jede Befestigungsvorrichtung der ersten Befestigungsvorrichtung (28) ähnlich, vorzugsweise identisch, ist.

9. Ausgangshebel (11) nach Anspruch 8, **dadurch gekennzeichnet, dass** die äußeren Flansche (32) der zwei Befestigungsvorrichtungen (28) identisch sind.

10. Ausgangshebel (11) nach einem der Ansprüche 8 oder 9, **dadurch gekennzeichnet, dass** die inneren Flansche (30) der zwei Befestigungsvorrichtungen (28) identisch sind.

11. Ausgangshebel (11) nach einem der Ansprüche 8 bis 10, **dadurch gekennzeichnet, dass** jede Befestigungsvorrichtung (28) zwei Befestigungselemente (280), wie z. B. Nieten, umfasst, jeder Innenring (240) eine Scheibenform aufweist, die auf der jeweiligen Rollenachse (A24) zentriert ist und eine innere Halbscheibe (240A) und eine äußere Halbscheibe (240B), die komplementär zur inneren Halbscheibe ist, definiert, die innere Halbscheibe jeder Nachlaufrolle (24A, 24B) auf der Seite der anderen Nachlaufrolle (24B, 24A) angeordnet ist, und dass die Befestigungselemente (280) jeder Nachlaufrolle in der äußeren Halbscheibe (240B) dieser Nachlaufrolle angeordnet sind.

12. Fachbildemaschine vom Typ mechanische Nockenbindung (10), **dadurch gekennzeichnet, dass** sie einen Ausgangshebel (11) nach einem der vorherigen Ansprüche umfasst.

13. Webrahmen (M), umfassend eine Fachbildemaschine vom Typ Schaftmaschinennockenmechanik (10), **dadurch gekennzeichnet, dass** die Fachbildemaschine nach dem vorherigen Anspruch ist.

14. Verfahren zum Zusammenbau eines Ausgangshebels (11) nach einem der Ansprüche 4 bis 6, **dadurch gekennzeichnet, dass** das Verfahren für mindestens eine der Rollen (24A, 24B) die Schritte umfasst, die aus Folgendem bestehen:
a) Stapeln, in einem Positionierungswerkzeug, des inneren Flanschs (30), der Abstandhalter (36; 436), des Abstandhalterflanschs (34) und des äußeren Flanschs (32), sodass alle Durchgangslöcher (291, 352, 290; 439, 441) der Gabelkopfnieten (284) übereinstimmen;
b) Einsetzen der Gabelkopfnieten (284) in die entsprechenden Durchgangslöcher und anschließendes Verformen der Gabelkopfnieten unter Druck, sodass der innere Flansch (30), der Abstandhalter (36; 436), der Abstandhalterflansch (34) und der äußere Flansch (32) fest miteinander verbunden sind und zusammen eine Befestigungsunteranordnung bilden;
c) Positionieren der äußeren Befestigung (28B) der Befestigungsunteranordnung auf dem entsprechenden Befestigungsabschnitt (122A), sodass die Durchgangslöcher (126, 350, 288) der Hebelnieten (282) übereinstimmen;
d) Einsetzen der Hebelnieten (282) in die entsprechenden Durchgangslöcher (126, 350, 288) und anschließendes Verformen der Hebelnieten (282) unter Druck, um die Befestigungsunteranordnung an dem entsprechenden Befestigungsabschnitt (122A, 122B) zu befestigen;
e) Positionieren der Nachlaufrolle (24A, 24B) zwischen dem inneren (30) und dem äußeren (32) Flansch der entsprechenden Befestigungsvorrichtung (28), sodass die Durchgangslöcher (286, 248) der Befestigungsvorrichtung (280) übereinstimmen, und
f) Einsetzen der Befestigungsvorrichtung (280) in die entsprechenden Durchgangslöcher (286, 248) und dann Verformen der Befestigungsvorrichtung (280) unter Druck, um die Nachlaufrolle fest mit der Befestigungsunteranordnung (28) zu verbinden.

15. Zusammenbauverfahren nach dem vorherigen Anspruch zum Zusammenbau eines Ausgangshebels (11) nach Anspruch 7, **dadurch gekennzeichnet, dass** in Schritt a) der Verstärkungsflansch (70) zusammen mit dem inneren Flansch (30) angebracht wird, und dass nach Abschluss von Schritt b) der Verstärkungsflansch (70) Teil der Befestigungsunteranordnung ist.

16. Zusammenbauverfahren nach einem der Ansprüche 14 oder 15, **dadurch gekennzeichnet, dass** das Zusammenbauverfahren nach Schritt d) und vor Schritt e) einen Zwischenschritt (g) umfasst, wobei der Zwischenschritt (g) darin besteht, eine Nachbearbeitung der Löcher (286) für den Durchgang der Befestigungsvorrichtungen (280) und der Bohrung (118) des Körpers (110) des Hebels (11) durchzuführen.

## Claims

1. An output lever (11) with cam follower rollers of a cam shed-forming mechanism, the output lever comprising a body (110) and two follower rollers (24A, 24B), wherein:
- the body of the output lever, formed in a plate with two opposite faces (112, 114) defining between them a median plane (P11), comprises a central portion (116) with two opposite surfaces (117A, 117B) in which a bore (118) is formed, centered on a main axis (A11) receiving a bearing (120), two attachment portions (122A, 122B) and an extension (15), the attachment portions and the extension being formed radially to the main axis and being distinct from each other
- each follower roller (24A, 24B) is offset from the median plane (P11) along the main axis (A11) and comprises an inner ring (240), an outer ring (242) and rolling elements (244) interposed between the inner and outer rings such that the outer ring is free to rotate relative to the inner ring about a roller axis (A24) parallel to the main axis (A11), the outer ring has a contact surface (S242), which is radial to the roller axis (A24) and intended for contact with a follower (22A, 22B) of a cam (22) of the shed-forming mechanism (10),
- each follower roller (24A, 24B) is connected to a respective attachment portion (122A, 122B) by means of a respective attachment device (28), each attachment device comprising an inner fastener (28A) located on the side of the other follower roller (24B, 24A) relative to the inner ring and an outer fastener (28B) located on the opposite side of the other follower roller (24B, 24A) relative to the inner ring, the inner and outer fasteners each comprising one or more flanges (30, 32, 34; 30, 32, 34, 70), each of which is formed in a plate, which are supported in parallel planes with each other and are connected to each other,
- each follower roller (24A, 24B) is clevis-mounted between an inner flange (30) of an inner fastener (28A) and an outer flange (32) of an outer fastener (28B) and is secured to the inner (30) and outer (32) flanges by an attachment device (280),
- the outer fasteners (28B) are assembled to the corresponding attachment portion (122A, 122B) by lever rivets (282), the outer fastener (28B) being supported in parallel planes on one of the faces (112, 114) of the corresponding attachment portion (122A, 122B) such that the contact surfaces (S242) of the two follower rollers are located on either side of the median plane (P11),
- at least one of the follower rollers, called the first follower roller, is fixed to a first of the two attachment portions (122A, 122B) by means of a first attachement device (28),
**characterized in that** the first attachment portion (122A, 122B) of the output lever (11) comprises two opposite surfaces (123A, 123B) which are connected to each other by an edge(124) and which are separated from each other by a distance equal to a thickness of the central portion (116),
**in that** each of the two surfaces (123A, 123B) of the first attachment portion (122A) is coplanar with a respective surface (117A, 117B) of the central portion (116), and
**in that** the contact surface (S242) of the first follower is located opposite the flange (124) of the first attachment portion (122A).

2. The output lever (11) according to claim 1, wherein the inner (28A) and outer (28B) fasteners of the first attachment device (28) are joined by clevis rivets (284).

3. The output lever (11) according to claim 2, wherein the outer fastener (28B) comprises an outer flange (32) and a spacer flange (34), the outer and spacer flanges each being formed in a respective plate and being joined together by riveting, the outer flange (32) having an inner face (32A) and an opposing outer face (32B), the inner face of the outer flange bearing on the first follower roller (24A, 24B) the outer flange (32) being fixed to the first follower roller by the attachment device (280), while the spacer flange (34) is assembled to the first attachment portion (122A, 122B) by means of the lever rivets (282), the spacer flange (34) being interposed between the outer flange (32) and the first attachment portion (122A, 122B) so as to offset the inner face (32A) of the outer flange from a first of the two surfaces (123B, 123A) of the first attachment portion.

4. The output lever (11) according to any one of claims 1 to 3, wherein the inner fastener (28A) of the first fastening system (28) comprises an inner flange (30), which is provided in a plate and has an outer face (30B) and an opposite inner face (30A) and which rests on the first follower roller (24A, 24B), the inner flange being fixed to the first follower roller by means of the attachment device (280), and wherein the inner flange (30) is supported on the outer fastener (28B) by means of one or more struts (36; 436) provided in a plate, so that the inner face (30A) of the inner flange (30) and the inner face (32A) of the outer flange (32) are parallel to each other and separated by a distance equal to the thickness (E24) of the first follower roller, except for assembly clearances.

5. The output lever (11) according to claim 4, wherein each strut (36; 436) is secured to the inner flange (30) and the outer fastener (28B) by one or more clevis rivets (284).

6. The output lever (11) according to claim 5, wherein the one or more clevis rivets (284) secure the spacer flange (34) of the outer fastener (28B) and each strut (36; 436) to the inner flange (30) of the inner fastener (28A) and the outer flange (32) of the outer fastener (28B).

7. The output lever (11) according to any one of claims 1 to 6, wherein the inner fastener (28A) comprises a reinforcing flange (70), which is formed in a plate and has an inner face (70A) and an opposite outer face (70B), the inner face of the reinforcing flange jointly abutting the outer face (30B) of the inner flange (30) and a second of the two surfaces (123A, 123B) of the first attachment portion (122A, 122B), the reinforcing flange (70) being fixed to the first attachment portion by means of the lever rivets (282) on the one hand and, on the other, fixed to the inner flange (30) by means of the clevis rivets (284).

8. The output lever (11) according to any one of claims 1 to 7, wherein the two follower rollers (24A, 24B) are mounted to a respective attachment portion (122A, 122B) by means of a respective attachment device (28), each attachment device being similar, preferably identical, to the first attachment device (28).

9. The output lever (11) according to claim 8, wherein the outer flanges (32) of the two attachment devices (28) are identical.

10. The output lever (11) according to any one of claims 8 or 9, wherein the inner flanges (30) of the two attachment devices (28) are identical.

11. The output lever (11) according to any one of claims 8 to 10, wherein each attachment device (28) comprises two fasteners (280), such as rivets, each inner ring (240) has a disk shape centered on the respective roller axis (A24) and defines an inner half disk (240A) and an outer half disk (240B) complementary to the inner half disk, the inner half disk of each follower roller (24A, 24B) being located on the side of the other follower roller (24B, 24A), and wherein the fasteners (280) of each follower roller are formed in the outer half disk (240B) of that follower roller.

12. A mechanical cam shed-forming mechanism (10), further comprising an output lever (11) according to any one of claims 1 to 11.

13. A loom (M) comprising a mechanical cam shed-forming mechanism (10), wherein the shedding machine is according to claim 12.

14. A method of assembling an output lever (11) according to any one of claims 4 to 6, wherein the method comprises, for at least one of the rollers (24A, 24B), the steps of:
a) stacking the inner flange (30), the struts (36; 436), the spacer flange (34) and the outer flange (32) in a positioning tool, so that all through holes (291, 352, 290; 439, 441) of the clevis rivets (284) coincide;
b) inserting the clevis rivets (284) into the corresponding through holes and then deforming the clevis rivets under pressure so that the inner flange (30), the strut (36; 436), the spacer flange (34) and the outer flange (32) are connected to each other and together form an attachment subassembly;
c) positioning the outer fastener (28B) of the fastener subassembly over the corresponding attachment portion (122A) so that the through holes (126, 350, 288) of the lever rivets (282) coincide;
d) inserting the lever rivets (282) into the corresponding through holes (126, 350, 288) and then deforming the lever rivets (282) under pressure so as to secure the fastener subassembly to the corresponding attachment portion (122A, 122B);
e) positioning the follower (24A, 24B) between the inner (30) and outer (32) flanges of the corresponding fastener (28) so that the through holes (286, 248) of the attachment device (280) coincide, and
f) inserting the attachment device (280) into the corresponding through holes (286, 248) and then deforming the attachment device (280) under pressure so as to secure the follower to the fastener subassembly (28).

15. An assembly method according to the preceding claim of assembling an output lever (11) according to claim 7, **characterized in that**, in step a), the reinforcing flange (70) is placed together with the inner flange (30), and that, after step b), the reinforcing flange (70) is part of the fastener subassembly.

16. The assembly method according to any one of claims 14 or 15, in which the assembly method comprises an intermediate step (g), subsequent to step d) and prior to step e), the intermediate step (g) consisting of reworking the holes (286) through which the fastening devices (280) pass and the bore (118) of the body (110) of the lever (11).
